(19) Europäisches Patentamt
European Patent Office
Office européen des brevets

(11) EP 4 693 512 A1

(12) # EUROPEAN PATENT APPLICATION
published in accordance with Art. 153(4) EPC

(43) Date of publication:
**11.02.2026 Bulletin 2026/07**

(21) Application number: **24781162.3**

(22) Date of filing: **25.03.2024**

(51) International Patent Classification (IPC):
***H01M 4/62*** *(2006.01)* ***H01M 4/13*** *(2010.01)*
***H01M 10/42*** *(2006.01)* ***H01M 10/052*** *(2010.01)*
***C08G 73/10*** *(2006.01)* ***C08J 3/24*** *(2006.01)*
***H01M 4/02*** *(2006.01)*

(52) Cooperative Patent Classification (CPC):
**H01M 4/667; H01M 4/622; H01M 4/661; H01M 10/054;** H01M 10/052; H01M 2004/027; Y02E 60/10

(86) International application number:
**PCT/KR2024/003728**

(87) International publication number:
**WO 2024/205171 (03.10.2024 Gazette 2024/40)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **26.03.2023 KR 20230039410**
**18.04.2023 KR 20230050726**

(71) Applicant: **SAMSUNG SDI CO., LTD.**
**Yongin-si, Gyeonggi-do 17084 (KR)**

(72) Inventors:
- **BAE, Woo Jin**
**Yongin-Si Gyeonggi-do 17084 (KR)**
- **MOON, Jong Seok**
**Yongin-Si Gyeonggi-do 17084 (KR)**
- **LEE, Kang Hee**
**Yongin-Si Gyeonggi-do 17084 (KR)**
- **WOO, Hyun Sik**
**Yongin-Si Gyeonggi-do 17084 (KR)**
- **PARK, Jong Seok**
**Yongin-Si Gyeonggi-do 17084 (KR)**
- **KIM, Hee Min**
**Yongin-Si Gyeonggi-do 17084 (KR)**
- **PARK, Jin Hwan**
**Yongin-Si Gyeonggi-do 17084 (KR)**

(74) Representative: **Michalski Hüttermann & Partner Patentanwälte mbB**
**Kaistraße 16A**
**40221 Düsseldorf (DE)**

(54) **BINDER, AND ANODE AND LITHIUM BATTERY COMPRISING SAME**

(57) Provided are a binder, an anode comprising a protective layer including the binder, and lithium battery comprising the anode, wherein the binder comprises a third polymer that is product of a cross-linking reaction between one or more first polymers comprising a first functional group and being selected from among fluorine-substituted poly(amic acid) and fluorine-substituted polyimide and a second polymer comprising a second functional group and being water soluble, wherein the first polymer and the second polymer are cross-linked by forming an ester bond through a reaction between the first functional group and the second functional group.

FIG. 1

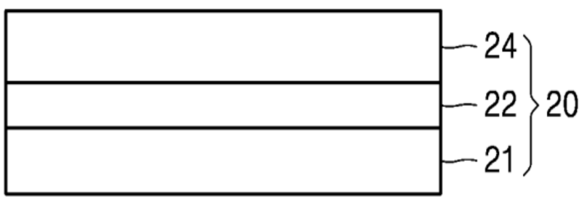


EP 4 693 512 A1

## Description

### Technical Field

One or more embodiments relate to a binder, and an anode and a lithium battery each including the same.

### Background Art

In lithium batteries including a lithium metal-containing anode or anode-free lithium batteries not including an anode active material, protective layers are used to inhibit the formation of dendrites and have uniform ion-flux if dendrites are formed.

As a protective layer, a polymer protective layer, an inorganic protective layer, or an organic/inorganic composite protective layer may be used, and a thickness of the protective layer should be 10 μm or more to obtain sufficient ionic conductivity. However, there have been issues in that, as the thickness of a protective layer increases, the current density of a lithium battery employing the protective layer increases.

Although a hybrid binder of polyimide and polyvinyl alcohol has been applied to a protective layer to solve these problems, a stable solid electrolyte interphase (SEI) was not easily formed during initial plating.

Therefore, in lithium batteries including a lithium metal-containing anode or anode-free lithium batteries not including an anode active material, a protective layer capable of providing high initial efficiency, excellent lifespan characteristics, and improved electrode stability, and enabling the suppression of changes in volume of an electrode and a binder forming the protective layer are required.

### Disclosure of Invention

### Technical Problem

One or more embodiments include a binder forming a protective layer providing improved initial capacity, lifespan characteristics, and electrode stability and inhibiting a volume change of an electrode.

One or more embodiments include an anode including a protective layer including the binder.

One or more embodiments include a lithium battery including the anode.

### Solution to Problem

According to one or more embodiments, a binder includes

a third polymer as a cross-linked product of a first polymer and a water-soluble second polymer, wherein the first polyemer includes a first functional group and at least one selected from polyamic acid and polyimide each substituted with fluorine, and the water-soluble second polymer includes a second functional group,

wherein the first polymer is cross-linked to the second polymer by an ester bond formed via a reaction between the first functional group and the second functional group.

According to one or more embodiments,
an anode includes an anode current collector, and a protective layer disposed on the anode current collector and including the binder.

According to one or more embodiments,
a lithium battery includes a cathode, the anode, and an electrolyte disposed between the cathode and the anode.

### Advantageous Effects of Invention

According to embodiments, by using the binder including the cross-linked polymer in which the fluorine-substituted polyamic acid or polyimide is cross-linked to the water-soluble binder, the lithium battery may have improved initial efficiency, lifespan characteristics, and electrode stability. Volume change of the lithium battery may also be inhibited.

### Brief Description of Drawings

FIG. 1 is a cross-sectional view of an anode according to embodiments.

FIG. 2 is a cross-sectional view of an anode according to embodiments.
FIG. 3 is a schematic diagram of a lithium battery according to embodiments.
FIG. 4 is a schematic diagram of a lithium battery according to embodiments.
FIG. 5 is a schematic diagram of a lithium battery according to embodiments.

## Mode for the Invention

Hereinafter, a binder, and an anode and a lithium battery each including the same will be described in more detail.

As used herein, the term "cross-link" refers to a bond connecting one polymer chain to another polymer chain. Throughout the specification, the cross-link is a covalent bond. As used herein, the term "linker or cross-linker" refers to a functional group connecting one polymer chain to another polymer chain. As used herein, the term "cross-linked polymer" refers to a polymer in which one polymer chain is connected to another polymer chain via at least one linker. The cross-linked polymer may also be a product of a cross-linking reaction of one or more polymers.

As used herein, the term "substituted with fluorine" refers to a state in which a hydrogen included in a polymer is substituted with fluorine or a C1-C5 alkyl group substituted with fluorine.

A binder according to embodiments may include a third polymer as a cross-linked product of a first polymer and a water-soluble second polymer, wherein the first polymer includes a first functional group and at least one selected from polyamic acid and polyimide each substituted with fluorine and the water-soluble second polymer includes a second functional group, wherein the first polymer is cross-linked to the second polymer by an ester bond formed via a reaction between the first functional group and the second functional group. The third polymer may be a cross-linked polymer of the first polymer and the second polymer. A lithium battery including an anode including a protective layer including the binder may provide excellent anode stability derived from fluorine-containing polyimide, inhibit volume expansion of an anode, provide both increased initial charge/discharge efficiency and improved lifespan characteristics, because the binder includes the third binder as a cross-linked polymer of the fluorine-containing first polymer and the second polymer cross-linked via an ester bond.

In the binder, the first functional group and the second functional group respectively included in the first polymer and the second polymer may be each independently at least one selected from a carboxyl group, a hydroxyl group, an amide group, and an aldehyde group, but are not limited thereto, and any functional groups reacting with the first functional group and the second functional group to form a cross-link including an ester bond may also be used. For example, the first functional group may be a carboxyl group (-COOH), and the second functional group may be a hydroxyl group (-OH). The carboxyl group may react with a hydroxyl group to form an ester bond. In the first polymer, the first functional group may not be linked to a trivalent aromatic group but linked to a side chain of a divalent aromatic group included in polyamic acid and polyimide.

In the binder, the first polymer may include an alkali metal. The alkali metal may be sodium, lithium, or the like. The first polymer may be substituted or doped with an alkali metal. For example, in the polyamic acid, a hydrogen of a carboxyl group linked to the trivalent aromatic group included in the polyamic acid may be substituted with an alkali metal ion. For example, in the polyimide, an alkali metal ion may be doped to form a coordinate bond with an amide group. Initial charge/discharge efficiency may be increased because the first polymer previously includes an alkali metal (pre-lithiation).

A content of the alkali metal included in the first polymer may be about 0.2 to about 1.0 to in an equivalence ratio to the carboxyl group or the amide group. For example, the content of the alkali metal included in the first polymer may be about 0.2 to about 0.8 in an equivalence ratio to the carboxyl group or the amide group. For example, the content of the alkali metal included in the first polymer may be about 0.3 to about 0.7 in an equivalence ratio to the carboxyl group or the amide group. For example, the content of the alkali metal included in the first polymer may be about 0.4 to about 0.6 in an equivalence ratio to the carboxyl group or the amide group. For example, the content of the alkali metal included in the first polymer may be about 0.45 to about 0.55 in an equivalence ratio to the carboxyl group or the amide group. Within the above-described ranges of the alkali metal content, the binder may have more improved physical properties.

If the Li content of polyamic acid, i.e., a degree of substitution of lithium ions, is less than 0.2 in an equivalence ratio to carboxylic acid, a pre-lithiation ratio may decrease, resulting in insignificant effect of inhibiting irreversibility in a first cycle. For example, if the Li content of polyamic acid, i.e., a degree of substitution of lithium ions, is greater than 1.0 in an equivalence ratio to carboxylic acid, an imidation ratio may significantly decrease, resulting in deterioration of lifespan characteristics. The Li content range, i.e., degree of substitution of lithium ions, may be obtained by adding LiOH used for lithiation of polyamic acid in an equivalence ratio of about 0.2 to about 1.0 to carboxylic acid of polyamic acid.

For example, the polyimide may be represented by Formula 1 or 2 below.

<Formula 1>

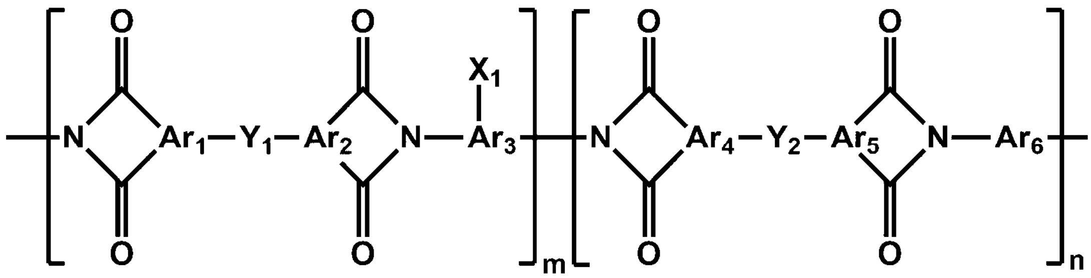

<Formula 2>

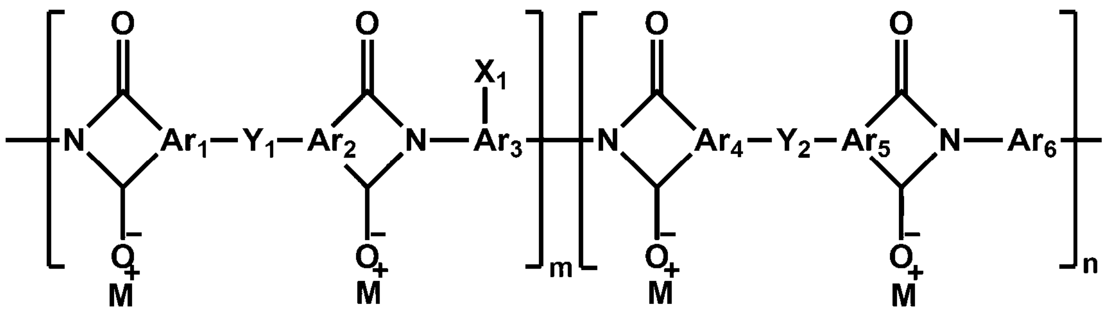

In Formulae 1 and 2,

M may be an alkali metal,
$Ar_1$, $Ar_2$, $Ar_4$ and $Ar_5$ may be each independently an aromatic cyclic group selected from: a trivalent C6-C24 arylene group unsubstituted or substituted with a halogen atom or a C1-C10 alkyl group unsubstituted or substituted with a halogen atom; and a trivalent C4-C24 heteroarylene group unsubstituted or substituted with a halogen atom or a C1-C10 alkyl group unsubstituted or substituted with a halogen atom, wherein the aromatic cyclic group may be a single aromatic ring, a fused ring of two or more aromatic rings, or a linked ring of two or more aromatic rings linked via a single bond, -O-, -S-, -C(=O)-, $-S(=O)_2-$, -Si(Ra)(Rb)- (wherein Ra and Rb are each independently a C1-C10 alkyl group), a C1-C10 alkylene group unsubstituted or substituted with a halogen atom, or -C(=O)-NH-O, and
$Ar_3$ and $Ar_6$ may be each independently an aromatic cyclic group selected from: a divalent C6-C24 arylene group unsubstituted or substituted with fluorine or a C1-C10 alkyl group unsubstituted or substituted with fluorine; and a divalent C4-C24 heteroarylene group unsubstituted or substituted with fluorine or a C1-C10 alkyl group unsubstituted or substituted with fluorine, wherein the aromatic cyclic group may be a single aromatic ring, a fused ring of two or more aromatic rings, or a linked ring of two or more aromatic rings linked via a single bond, -O-, -S-, -C(=O)-, $-S(=O)_2-$, -Si(Ra)(Rb)- (wherein Ra and Rb are each independently a C1-C10 alkyl group), a C1-C10 alkylene group unsubstituted or substituted with a halogen atom, or -C(=O)-NH-, $X_1$ may be -COOH, -OH, $-CO-NH_2$, or -COH, $Y_1$ and $Y_2$ may be each independently a C1-C10 alkylene group substituted with fluorine; and each of n and m may be a mole fraction in a repeating unit satisfying $0 < n < 1$, $0 < m < 1$, and $n+m=1$.

For example, the polyimide may be represented by Formula 3 or 4 below.

<Formula 3>

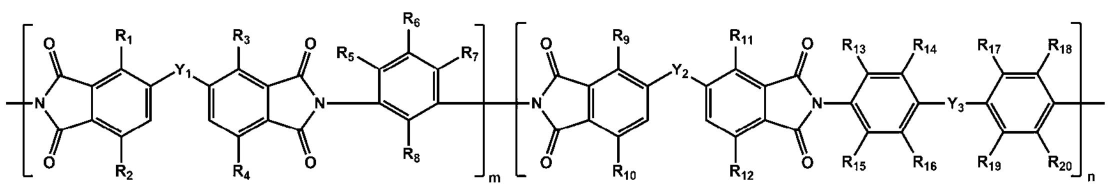

<Formula 4>

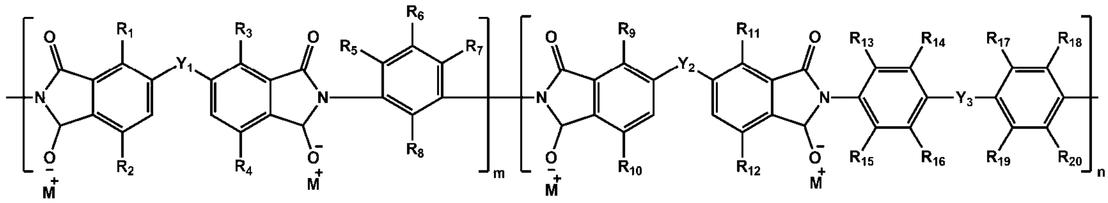

In Formulae 3 and 4,

M may be lithium or sodium,

$R_1$ to $R_{20}$ may be each independently: a halogen atom; -COOH; -OH; -CO-$NH_2$; - COH; a C1-C10 alkyl group unsubstituted or substituted with a halogen atom; a C6-C20 aryl group unsubstituted or substituted with a halogen atom; or a C2-C20 heteroaryl group unsubstituted or substituted with a halogen atom, wherein at least one of $R_5$ to $R_8$ may be -COOH, -OH, -CO-$NH_2$, or -COH, at least one of $R_{13}$ to $R_{20}$ may be a C1-C10 alkyl group substituted with fluorine, $Y_1$ to $Y_3$ may be each independently a single bond or a C1-C10 alkylene group substituted with fluorine and; each of n and m may be a mole fraction in a repeating unit satisfying 0 < n < 1, 0 < m < 1, and n+m=1.

For example, the polyamic acid may be represented by Formula 7 or 8 below.

<Formula 7>

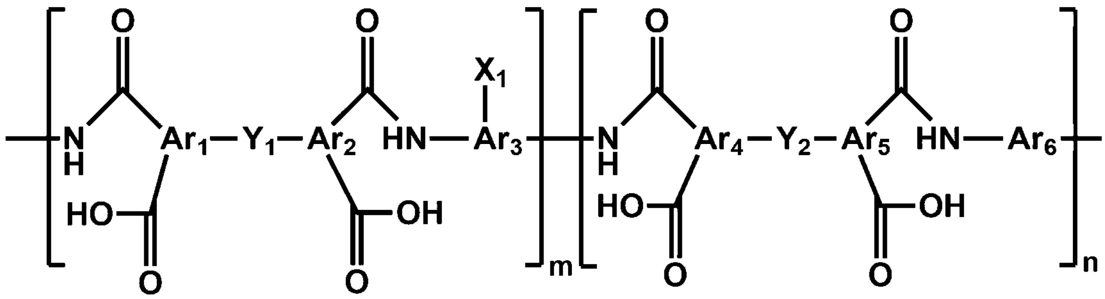

<Formula 8>

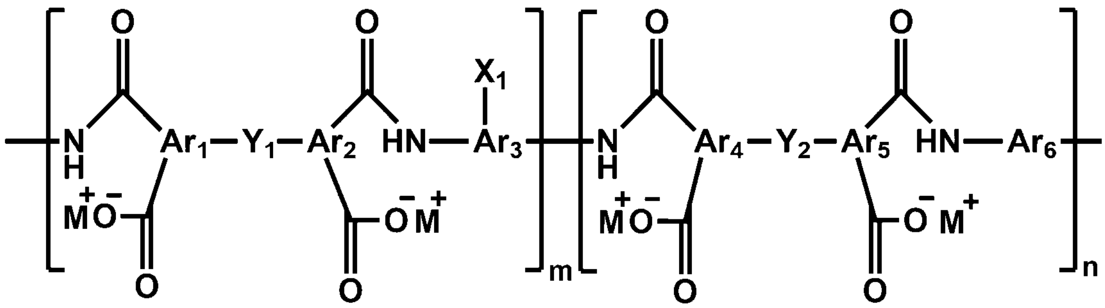

In Formulae 7 and 8,

M may be an alkali metal,

$Ar_1$, $Ar_2$, $Ar_4$ and $Ar_5$ may be each independently an aromatic cyclic group selected from: a trivalent C6-C24 arylene group unsubstituted or substituted with a halogen atom or a C1-C10 alkyl group unsubstituted or substituted with a halogen atom; and a trivalent C4-C24 heteroarylene group unsubstituted or substituted with a halogen atom or a C1-C10 alkyl group unsubstituted or substituted with a halogen atom, wherein the aromatic cyclic group may be a single aromatic ring, a fused ring of two or more aromatic rings, or a linked ring of two or more aromatic rings linked via a single bond, -O-, -S-, -C(=O)-, -S(=O)$_2$-, -Si(Ra)(Rb)- (wherein Ra and Rb are each independently a C1-C10 alkyl group), a C1-C10 alkylene group unsubstituted or substituted with a halogen atom, or -C(=O)-NH-O,

$Ar_3$ and $Ar_6$ may be each independently an aromatic cyclic group selected from: a divalent C6-C24 arylene group unsubstituted or substituted with fluorine or a C1-C10 alkyl group unsubstituted or substituted with fluorine; and a

divalent C4-C24 heteroarylene group unsubstituted or substituted with fluorine or a C1-C10 alkyl group unsubstituted or substituted with fluorine, wherein the aromatic cyclic group may be a single aromatic ring, a fused ring of two or more aromatic rings, or a linked ring of two or more aromatic rings linked via a single bond, -O-, -S-, -C(=O)-, $-S(=O)_2-$, -Si(Ra)(Rb)- (wherein Ra and Rb are each independently a C1-C10 alkyl group), a C1-C10 alkylene group unsubstituted or substituted with a halogen atom, or -C(=O)-NH-,

$X_1$ may be -COOH, -OH, $-CO-NH_2$, or -COH, $Y_1$ may be a C1-C10 alkylene group substituted with fluorine; and each of n and m may be a mole fraction in a repeating unit satisfying $0 < n < 1$, $0 < m < 1$, and n+m=1.

For example, the polyamic acid may be represented by Formula 9 or 10 below.

<Formula 9>

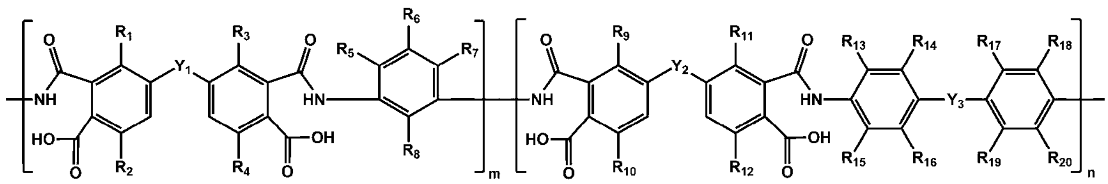

<Formula 10>

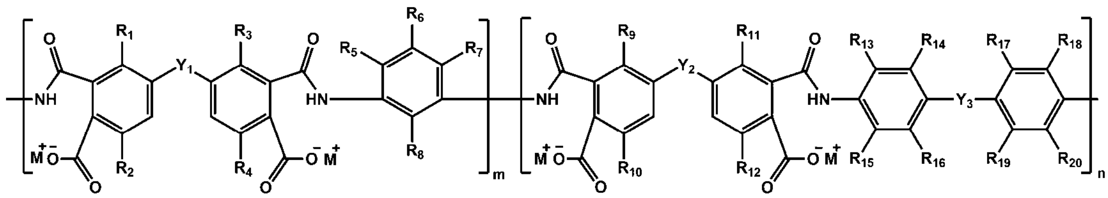

In Formulae 9 and 10,

M may be lithium or sodium,

$R_1$ to $R_{20}$ may be each independently: hydrogen; a halogen atom; -COOH; -OH; $-CO-NH_2$; -COH; a C1-C10 alkyl group unsubstituted or substituted with a halogen atom; a C6-C20 aryl group unsubstituted or substituted with a halogen atom; or a C2-C20 heteroaryl group unsubstituted or substituted with a halogen atom, wherein at least one of $R_5$ to $R_8$ may be -COOH, -OH, $-CO-NH_2$, or -COH, at least one of $R_{13}$ to $R_{20}$ may be a C1-C10 alkyl group substituted with fluorine, $Y_1$ to $Y_3$ may be each independently a single bond or a C1-C10 alkylene group substituted with fluorine; and each of n and m may be a mole fraction in a repeating unit satisfying $0 < n < 1$, $0 < m < 1$, and n+m=1.

For example, in the binder, the polyimide may be represented by Formula 5 or 6 below, and the polyamic acid may be represented by Formula 11 or 12 below.

<Formula 5>

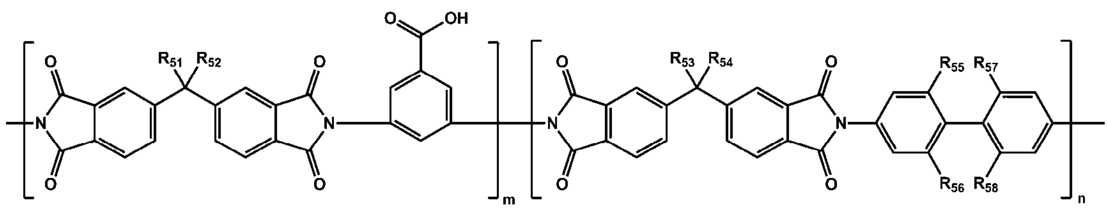

<Formula 6>

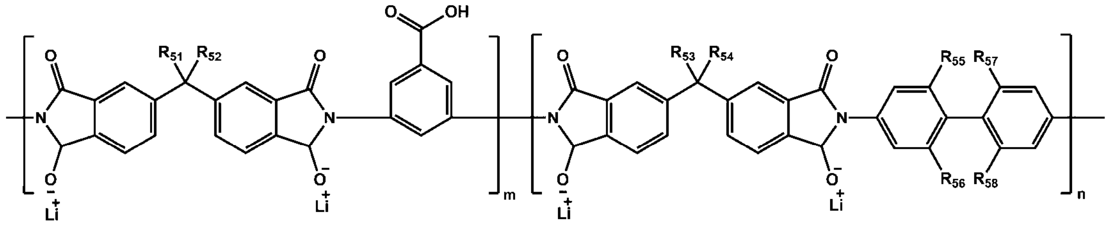

<Formula 11>

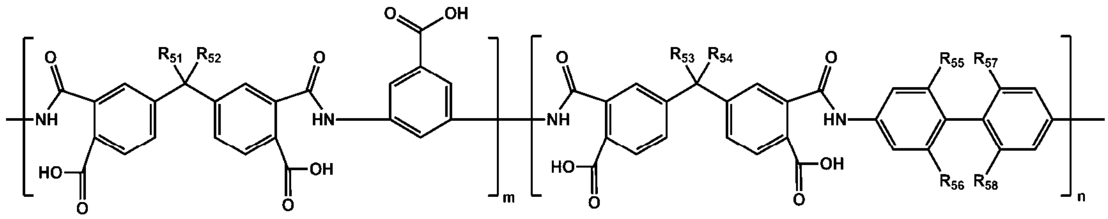

<Formula 12>

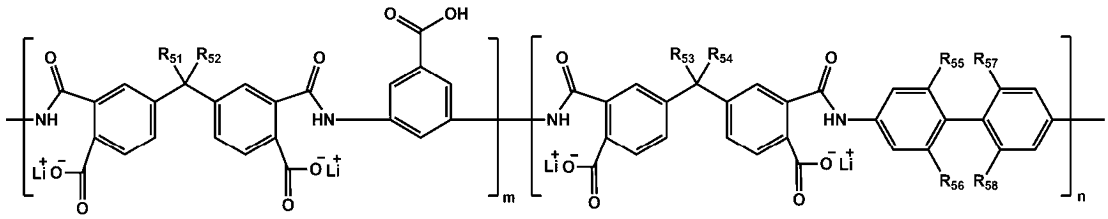

In Formulae 5, 6, 11 and 12,

$R_{51}$ to $R_{58}$ may be each independently a C1-C10 alkyl group unsubstituted or substituted with fluorine (F), wherein at least one of $R_{51}$ to $R_{58}$ may be a C1-C10 alkyl group substituted with fluorine, and each of n and m may be a mole fraction in a repeating unit satisfying $0 < n < 1$, $0 < m < 1$, and n+m=1.

For example, in the first polymer represented by Formulae 1 to 12, a mole fraction in a repeating unit including a cross-linker to a repeating unit not including a cross-linker may satisfy $0<m<0.5$, $0.5<n<1$, and m+n=1. For example, in the first polymer represented by Formulae 1 to 12, the mole fraction of a repeating unit including a cross-linker to a repeating unit not including a cross-linker may satisfy $0.1<m<0.4$, $0.6<n<0.9$, and m+n=1. For example, in the first polymer represented by Formulae 1 to 12, the mole fraction of a repeating unit including a cross-linker to a repeating unit not including a cross-linker may satisfy $0.15<m<0.35$, $0.65<n<0.85$, and m+n=1. For example, in the first polymer represented by Formulae 1 to 12, the mole fraction of a repeating unit including a cross-linker to a repeating unit not including a cross-linker may be $0.2<m<0.3$, $0.7<n<0.8$, and m+n=1. Within the above-described mole fraction ranges, the binder may provide more improved physical properties.

For example, the first polymer represented by Formulae 1 to 12 may be a random copolymer. For example, the first polymer represented by Formulae 1 to 12 may be a block copolymer.

The first polymer may have a weight average molecular weight of about 10,000 Da to about 1,200,000 Da. For example, in the binder, the first polymer may have a weight average molecular weight of about 10,000 Da to about 1,100,000 Da. For example, in the binder, the first polymer may have a weight average molecular weight of about 10,000 Da to about 1,000,000 Da. For example, the first polymer may have a weight average molecular weight of about 10,000 Da to about 500,000 Da. For example, the first polymer may have a weight average molecular weight of about 100,000 Da to about 500,000 Da. For example, the first polymer may have a weight average molecular weight of about 100,000 Da to about 400,000 Da. For example, the first polymer may have a weight average molecular weight of about 100,000 Da to about 300,000 Da. Within the above-described ranges of the weight average molecular weight of the first polymer, physical properties of the binder may further be improved.

In the binder, the second polymer may be a polymerization product of at least one monomer selected from vinyl monomers, acetate monomers, alcohol monomers, acrylic monomers, methacrylic monomers, acrylamide monomers, and methacrylamide monomers, or a hydrolysate thereof.

For example, the second polymer may be a polymerization product of at least one monomer selected from vinyl

acetate, vinyl alcohol, butyl (meth)acrylate, 2-hydroxyethyl (meth)acrylate, 2-hydroxypropyl (meth)acrylate, 4-hydroxybutyl (meth)acrylate, 6-hydroxyhexyl (meth)acrylate, 8-hydroxyoctyl (meth)acrylate, 2-hydroxyethyleneglycol (meth) acrylate, 2-hydroxypropyleneglycol (meth)acrylate, acrylic acid, methacrylic acid, 2-(meth)acryloyloxy acetic acid, 3-(meth)acryloyloxy propyl acid, 4-(meth)acryloyloxy butyl acid, itaconic acid, maleic acid, 2-isocyanatoethyl (meth) acrylate, 3-isocyanatopropyl (meth)acrylate, 4-isocyanatobutyl (meth)acrylate, (meth)acrylamide, ethylenedi(meth)acrylate, diethyleneglycol(meth)acrylate, triethyleneglycoldi(meth)acrylate, trimethylenepropanetri(meth)acrylate, trimethylenepropanetriacrylate, 1,3-butanediol(meth)acrylate, 1,6-hexanedioldi(meth)acrylate, allyl acrylate, and N-vinyl caprolactam, or a hydrolysate thereof.

For example, the second polymer may be polyvinylalcohol (PVA). For example, polyvinylalcohol may be a hydrolysate obtained by alkaline hydrolyzing polyvinyl acetate.

The polyvinylalcohol may have a saponification degree of about 60 % to about 99 %. For example, the polyvinylalcohol may have a saponification degree of about 70 % to about 95 %. For example, the polyvinylalcohol may have a saponification degree of about 75 % to about 90 %. For example, the polyvinylalcohol may have a saponification degree of about 80 % to about 90 %. For example, the polyvinylalcohol may have a saponification degree of about 85 % to about 90 %. Within the above-described ranges of the saponification degree, the binder may provide further improved physical properties.

The polyvinylalcohol may have a weight average molecular weight of about 10,000 Da to about 500,000 Da. For example, the polyvinylalcohol may have a weight average molecular weight of about 10,000 Da to about 500,000 Da. For example, the polyvinylalcohol may have a weight average molecular weight of about 10,000 Da to about 400,000 Da. For example, the polyvinylalcohol may have a weight average molecular weight of about 10,000 Da to about 300,000 Da. For example, the polyvinylalcohol may have a weight average molecular weight of about 10,000 Da to about 200,000 Da. For example, the polyvinylalcohol may have a weight average molecular weight of about 50,000 Da to about 150,000 Da. For example, the polyvinylalcohol may have a weight average molecular weight of about 70,000 Da to about 100,000 Da. For example, the polyvinylalcohol may have a weight average molecular weight of about 80,000 Da to about 100,000 Da. Within the above-described ranges of the weight average molecular weight of the polyvinylalcohol, physical properties of the binder may further be improved.

In the binder, a weight ratio of the first polymer to the second polymer which are included in the third polymer may be about 1:99 to about 50:50. For example, in the binder, the weight ratio of the first polymer to the second polymer which are included in the third polymer may be from about 5:95 to about 45:55. For example, in the binder, the weight ratio of the first polymer to the second polymer which are included in the third polymer may be from about 5:95 to about 40:60. For example, in the binder, the weight ratio of the first polymer to the second polymer which are included in the third polymer may be from about 5:95 to about 35:65. For example, in the binder, the weight ratio of the first polymer to the second polymer which are included in the third polymer may be from about 10:90 to about 30:70. Within the above-described weight ratio ranges of the first polymer to the second polymer, physical properties of the binder may further be improved.

In the binder, the cross-linking reaction may be performed at a temperature of 100 °C or above. For example, the cross-linking reaction may be performed by heat-treating a composition including the first polymer and the second polymer at a temperature of 100 °C or above. For example, the cross-linking reaction may be performed by heat-treating a composition including the first polymer and the second polymer at a temperature of 120 °C or above. For example, the cross-linking reaction may be performed by heat-treating a composition including the first polymer and the second polymer at a temperature of 140 °C or above. For example, the cross-linking reaction may be performed by heat-treating a composition including the first polymer and the second polymer at a temperature of 160 °C or above. Within the above-described temperature ranges, the cross-linking reaction may proceed to produce a cross-linked polymer.

For example, in the binder, polyamic acid may be cured into polyimide while the cross-linking reaction is performed at a temperature of 100 °C or above. For example, the polyamic acid may have an imidation rate of 60 % or more. For example, the polyamic acid may have an imidation rate of 70 % or more. For example, the polyamic acid may have an imidation rate of 80 % or more. For example, the polyamic acid may have an imidation rate of 90 % or more. The imidation rate of the polyamic acid may be obtained by using $^1$H-NMR. Mechanical properties of the binder may further be improved because polyamic acid is cured into polyimide in the binder.

According to embodiments, the polyamic acid may have an acid equivalent of less than 300 g/eq. For example, the polyamic acid may have an acid equivalent of about 50 g/eq to about 250 g/eq. By lowering the acid equivalent of polyamic acid to less than 300 g/eq, the amount of carboxyl groups and/or carboxylates per unit mass may increase. If a silicon-based anode active material is used as a material for an anode, the increased amount of carboxyl groups and/or carboxylates per unit mass may increase interaction between the binder and an anode active material including a hydroxyl group on the surface thereof, thereby increasing binding strength with the anode active material. If the acid equivalent is 300 g/eq or more, initial efficiency and lifespan characteristics of the lithium battery may deteriorate.

In the binder, a modulus of the third polymer may have a value greater than each of a modulus of the first polymer and a modulus of the second polymer. As a cross-linked polymer formed by cross-linking the first polymer to the second polymer, the third polymer may have increased stiffness due to the increased modulus. For example, the third polymer may

have a modulus of 5 GPa or more. For example, the third polymer may have a modulus of 6 GPa or more. For example, the third polymer may have a modulus of 7 GPa or more The modulus may be an indentation modulus.

In the binder, an indentation hardness of the third polymer may be greater than each of an indentation hardness of the first polymer and an indentation hardness of the second polymer. For example, as a cross-linked polymer formed by cross-linking the first polymer to the second polymer, the third polymer may have an increased surface indentation hardness.

In the binder, the third polymer, as a cross-linked polymer, may have a three-dimensional network structure in which a plurality of first polymer chains are cross-linked to a plurality of second polymer chains via linkers or cross-linkers. A volume change of an electrode including the binder may be inhibited during charging and discharging because the third polymer has the network structure.

In the binder, the third polymer may have a weight average molecular weight of about 10,000 Da to about 1,500,000 Da. For example, in the binder, the third polymer may have a weight average molecular weight of about 10,000 Da to about 1,200,000 Da. For example, in the binder, the third polymer may have a weight average molecular weight of about 10,000 Da to about 1,100,000 Da. For example, in the binder, the third polymer may have a weight average molecular weight of about 10,000 Da to about 1000,000 Da. For example, the third polymer may have a weight average molecular weight of about 10,000 Da to about 500,000 Da. For example, the third polymer may have a weight average molecular weight of about 100,000 Da to about 500,000 Da. For example, the third polymer may have a weight average molecular weight of about 100,000 Da to about 400,000 Da. For example, the third polymer may have a weight average molecular weight of about 100,000 Da to about 300,000 Da. Within the above-described ranges of the weight average molecular weight of the third polymer, physical properties of the binder may further be improved.

For example, in the binder, the third polymer may be represented by one or more compounds represented by Formulae 13 to 16 below.

<Formula 13>

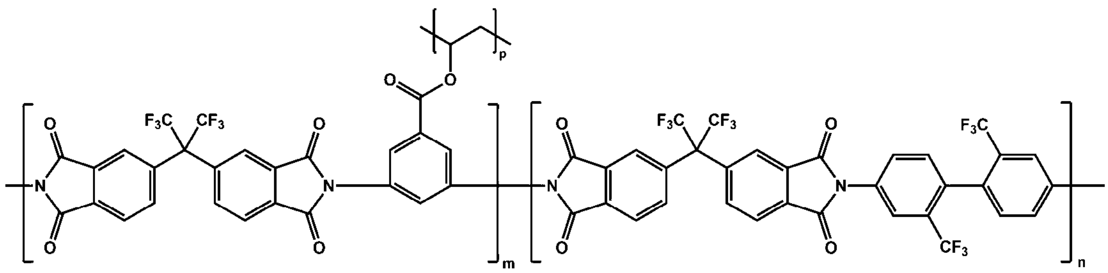

<Formula 14>

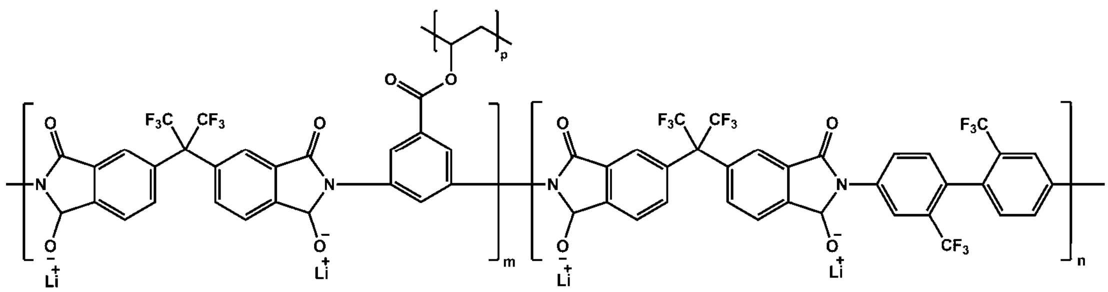

<Formula 15>

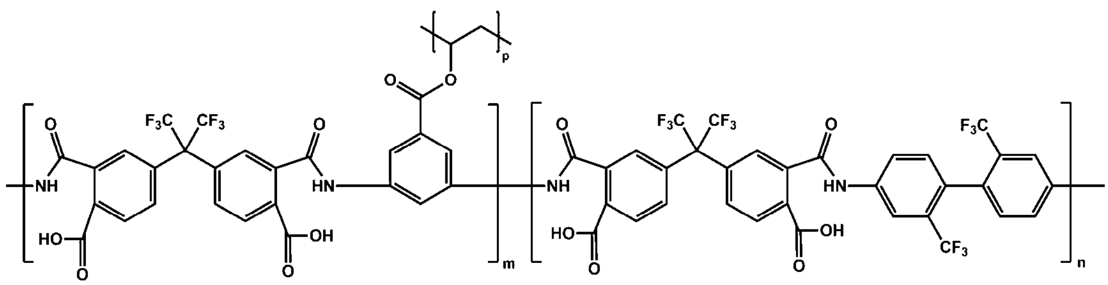

<Formula 16>

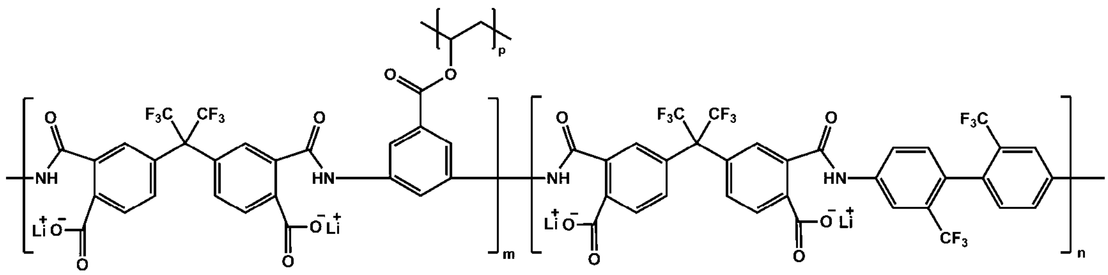

In the above formulae, each of n and m may be a mole fraction in the repeating units satisfying $0 < n < 1$, $0 < m < 1$, and n+m=1, and p, as a degree of polymerization, may be about 250 to about 12500.

The binder may further include a water-soluble fourth polymer selected from cellulose, hydroxyethyl ether, dextran, carboxymethylcellulose (CMC), alginate, cellulose nanofiber, xanthan gum, and guar gum. If the binder includes the fourth polymer, physical properties of the binder may be adjusted in various manners.

The binder may be used, for example, in an electrochemical cell. The binder may be used, for example, in a protective layer included in an electrochemical cell. Types of the electrochemical cell are not limited as long as the electrochemical cell stores energy via electrochemical reaction and may include primary and secondary batteries. Examples of the electrochemical cell may be alkali metal batteries such as lithium batteries and sodium batteries, alkali earth metal batteries such as magnesium batteries, metal-air batteries, super capacitors, and fuel cells.

An anode according to embodiments may include: an anode current collector; and a protective layer disposed on the anode current collector and including the above-described binder.

Hereinafter, an anode including a protective layer including the binder and a lithium battery including the same according to embodiments will be described in more detail.

[Anode]

An anode for a lithium battery according to embodiments may include: an anode current collector; and a protective layer disposed on one side of the anode current collector, wherein the protective layer may include the above-described binder. A lithium battery including the anode may have improved initial efficiency, lifespan characteristics, and electrode stability because the anode includes the protective layer including the binder . In some embodiments, a volume change of the lithium battery may be inhibited.

Referring to FIG. 1, an anode 20 may include: an anode current collector 21; and a protective layer 24 disposed on the anode current collector 21, wherein the protective layer 24 includes the above-described binder.

According to embodiments, the anode 20 may further include an anode interlayer 22 disposed between the anode current collector 21 and the protective layer 24.

Referring to FIG. 2, the anode 20 may further include an anode active material layer 23 disposed between the protective layer 24 and the anode current collector 21.

[Anode: Protective Layer]

Referring to FIGS. 1 and 2, the anode 20 may include: an anode current collector 21; and a protective layer 24 disposed on the anode current collector 21. The protective layer 24 may include the above-described binder.

According to embodiments, the protective layer 24 may have a thickness of 5 μm or less. The protective layer 24 may have a thickness of, for example, about 0.1 μm to about 5 μm, about 0.1 μm to about 3 μm, about 0.1 μm to about 2 μm, about 0.1 μm to about 1.5 μm, about 0.1 μm to about 1.2 μm, about 0.1 μm to about 1.2 μm, or about 0.2 μm to about 1 μm. Within the above-described ranges of the thickness of the protective layer 24, the protective layer may effectively inhibit decomposition of an electrolyte to suppress local imbalance of current density, thereby effectively inhibiting formation and/or growth of lithium dendrite. Therefore, a lithium battery including the protective layer 24 may have further improved cycle characteristics. If the protective layer 24 is too thick, energy density of the lithium battery may decrease. If the protective layer 24 is too thin, cycle characteristics of the lithium battery may be insignificantly improved.

According to embodiments, the protective layer 24 may have a modulus of 5 GPa or more. For example, the third polymer may have a modulus of 6 GPa or more. For example, the third polymer may have a modulus of 7 GPa or more. The modulus may be an indentation modulus.

According to embodiments, the protective layer 24 may have a recovery of 50 % or more. For example, the protective layer 24 may have a recovery of 55 % or more. For example, the protective layer 24 may have a recovery of 60 % or more. For example, the protective layer 24 may have a recovery of 65 % or more.

According to embodiments, the protective layer 24 may have an indentation hardness of 1200 $N/mm^2$ or more. For example, the protective layer 24 may have an indentation hardness of 1300 $N/mm^2$ or more. For example, the protective layer 24 may have an indentation hardness of 1400 $N/mm^2$ or more. For example, the protective layer 24 may have an indentation hardness of 1450 $N/mm^2$ or more. For example, the protective layer 24 may have an indentation hardness of 1500 $N/mm^2$ or more. For example, the protective layer 24 may have an indentation hardness of 1550 $N/mm^2$ or more.

According to embodiments, the protective layer 24 may be prepared by curing a protective layer-forming composition which will be described below. The protective layer-forming composition may include the above-described first polymer and the above-described second polymer. The protective layer 24 may be formed, for example, by applying the protective layer-forming composition onto the anode current collector 21 and curing the composition at a temperature of 100 °C or above.

The protective layer 24 may be formed, for example, by applying the protective layer-forming composition onto the anode current collector 21 and heat-treating the composition at a temperature of 100 °C or above for about 1 hour to about 10 hours. The protective layer 24 may be formed, for example, by applying the protective layer-forming composition onto the anode current collector 21 and heat-treating the composition at a temperature of 160 °C or above for about 1 hour to about 10 hours.

According to embodiments, the protective layer 24 may further include a conductive material.

The conductive material may be carbon black, graphite particulates, natural graphite, artificial graphite, acetylene black, Ketjen black, carbon fiber; carbon nanotubes; metal such as copper, nickel, aluminum, and silver each of which is used in powder, fiber, or tube form; or conductive polymers such as polyphenylene derivatives, but is not limited to, and any materials commonly used in the art as conductive materials may also be used.

[Anode: Anode Current Collector]

Referring to FIGS. 1 and 2, the anode 20 may include an current collector 21.

The anode current collector 21 may include, for example, indium (In), copper (Cu), magnesium (Mg), stainless steel, titanium (Ti), iron (Fe), cobalt (Co), nickel (Ni), zinc (Zn), aluminum (Al), germanium (Ge), lithium (Li), or an alloy thereof.

The anode current collector 21 may include, for example, a first metal substrate. The first metal substrate includes a first metal as a main component or may consist of the first metal. A content of the first metal contained in the first metal substrate may be, for example, 90 wt% or more, 95 wt% or more, 99 wt% or more, or 99.9 wt% or more based on a total weight of the first metal substrate. The first metal substrate may be formed of, for example, a material that does not react with lithium, i.e., a material that does not form an alloy and/or compound with lithium. The first metal may include, for example, indium (In), copper (Cu), magnesium (Mg), stainless steel, titanium (Ti), iron (Fe), cobalt (Co), nickel (Ni), zinc (Zn), aluminum (Al), germanium (Ge), lithium (Li), or an alloy thereof. The first metal substrate may be formed of, for example, one metal selected from those described above or an alloy of two or more metals thereof. The first metal substrate may be, for example, in the form of a sheet or foil. A thickness of the anode current collector 21 may be, for example, from 5 μm to 50 μm, from 10 μm to 50 μm, from 10 μm to 40 μm, or from 10 μm to 30 μm, but is not limited thereto and may be selected according to required properties of the lithium battery.

For example, the anode current collector 21 may include the first metal substrate and a coating layer (not shown) disposed on the first metal substrate and including a second metal. The second metal may have a higher Mohs hardness than that of the first metal. That is, because the coating layer including the second metal is harder than the substrate including the first metal, deterioration of the first metal substrate may be prevented. For example, a material constituting the first metal substrate may have a Mohs hardness of 5.5 or less. The Mohs hardness of the first metal may be, for example, 5.5 or less, 5.0 or less, 4.5 or less, 4.0 or less, 3.5 or less, or 3.0 or less. The Mohs hardness of the first metal may be, for example, from about 2.0 to about 6.0. The coating layer may include the second metal. For example, the coating layer may include the second metal as a main component or consist of the second metal. A content of the second metal contained in the coating layer may be, for example, 90 wt% or more, 95 wt% or more, 99 wt% or more, or 99.9 wt% or more based on a total weigh of the coating layer. The coating layer may be formed of, for example, a material that does not react with lithium, i.e., a material that does not form an alloy and/or compound with lithium. The Mohs hardness of the material constituting the coating layer may be, for example, 6.0 or more. For example, the Mohs hardness of the second metal may be 6.0 or more, 6.5 or more, 7.0 or more, 7.5 or more, 8.0 or more, 8.5 or more, or 9.0 or more. The Mohs hardness of the second metal may be, for example, from about 6.0 to about 12. If the Mohs hardness of the second metal is too low, deterioration of the anode current collector may not be inhibited. If the Mohs hardness of the second metal is too high, processing may not be easy. For example, the second metal may include at least one selected from titanium (Ti), manganese (Mn), niobium (Nb), tantalum (Ta), iridium (Ir), vanadium (V), rhenium (Re), osmium (Os), tungsten (W), chromium (Cr), boron (B), ruthenium (Ru), and rhodium (Rh). The coating layer may be formed of, for example, one of the metals described above or an alloy of at least two metals selected therefrom. A Mohs hardness difference between the first

metal included in the first metal substrate and the second metal included in the coating layer may be, for example, 2 or more, 2.5 or more, 3 or more, 3.5 or more, or 4 or more. If the Mohs hardness difference between the first metal and the second metal is within the ranges described above, deterioration of the anode current collector may be more effectively inhibited. The coating layer may have a single-layer structure or a multilayer structure including two or more layers. For example, the coating layer may have a double-layer structure including a first coating layer and a second coating layer. For example, the coating layer may have a triple-layer structure including a first coating layer, a second coating layer, and a third coating layer. A thickness of the coating layer may be, for example, from 10 nm to 1 μm, from 50 nm to 500 nm, from 50 nm to 200 nm, or from 50m to 150 nm. If the coating layer is too thin, it may be difficult to inhibit non-uniform growth of the lithium-containing metal layer. As the thickness of the coating layer increases, cycle characteristics of the lithium battery may be improved. However, if the coating layer is too thick, energy density of the lithium battery may decrease and formation of the coating layer may not be easy. The coating layer may be disposed on the first metal substrate by, for example, vacuum deposition, sputtering, or plating, but the method is not limited thereto and any method of forming the coating layer commonly used in the art may also be used.

The anode current collector 21 may include, for example, a base film and a metal layer disposed on one or both sides of the base film. The base film may include, for example, a polymer. The polymer may include, for example, polyethyleneterephthalate (PET), polyethylene (PE), polypropylene (PP), polybutyleneterephthalate (PBT), polyimide (PI), or any combination thereof. The metal layer may include, for example, indium (In), copper (Cu), magnesium (Mg), stainless steel, titanium (Ti), iron (Fe), cobalt (Co), nickel (Ni), zinc (Zn), aluminum (Al), germanium (Ge), lithium (Li), or an alloy thereof. If the anode current collector has the above-described structure, the weight of an anode may be reduced, so that energy density of the all-solid secondary battery may be increased.

[Anode: Anode Interlayer]

Referring to FIG. 1, the anode 20 may include an anode interlayer 22 disposed between the anode current collector 21 and the protective layer 24. Formation and/or growth of lithium dendrite may be more effectively inhibited because the anode 20 includes the anode interlayer 22.

The anode interlayer 22 may include, for example, a lithiophilic metal. The anode interlayer 22 may include, for example, a lithiophilic metal and a carbonaceous material.

The lithiophilic metal may be a material allowing lithiation and delithiation. The anode interlayer 22 may be formed by introducing the lithiophilic metal onto the anode current collector 21 via nanoparticle casting. If the anode interlayer 22 is introduced onto the anode current collector 21 by nanoparticle casting, lithium ions may pass through the anode interlayer 22 to form lithium metal between the anode interlayer 22 and the anode current collector 21.

The lithiophilic metal included in the anode interlayer 22 may be nanoparticles of the lithiophilic metal. The lithiophilic metal may have an average particle diameter of, for example, about 10 nm to about 4 μm, about 10 nm to about 1 μm, about 10 nm to about 500 nm, about 10 nm to about 100 nm, or about 20 nm to about 80 nm. Reversible plating and/or dissolution of lithium may occur more easily during a charge/discharge process because the lithiophilic metal has an average particle diameter within the ranges described above. For example, due to the nano-sized particle diameter of the lithiophilic metal, lithium ions may transmit the anode interlayer 22 including the lithiophilic metal, and thus lithium metal may be plated between the anode current collector 21 and the anode interlayer 22. The average particle diameter of the lithiophilic metal may be a median diameter D50 measured by using a laser particle size analyzer.

The lithiophilic metal may include, for example, at least one selected from gold (Au), platinum (Pt), palladium (Pd), silicon (Si), silver (Ag), aluminum (Al), bismuth (Bi), tin (Sn), and zinc (Zn). The lithiophilic metal may include, for example, silver (Ag).

The carbonaceous material may allow uniform application of the lithiophilic metal onto the anode current collector 21. The carbonaceous material may allow the lithiophilic metal to be uniformly applied onto the anode current collector 21, so that the anode current collector 21 may be uniformly coated with the lithiophilic metal. The lithiophilic metal uniformly applied thereto may allow uniform plating of lithium metal on the anode current collector 21 to prevent formation of lithium dendrite.

The carbonaceous material may include, for example, amorphous carbon, crystalline carbon, or any combination thereof. The carbonaceous material may include, for example, amorphous carbon.

The amorphous carbon may include, for example, carbon black (CB), acetylene black (AB), furnace black (FB), Ketjen black (KB), graphene, or any combination thereof. Amorphous carbon may be carbon that does not have crystallinity or has very low crystallinity and is distinguished from crystalline carbon or graphite-based carbon.

The anode interlayer 22 may include, for example, a lithiophilic metal and/or a carbonaceous material. The carbonaceous material may allow the lithiophilic metal to be uniformly applied onto the anode current collector 21, and the lithiophilic metal may allow lithium metal to be uniformly plated between the anode interlayer 22 and the anode current collector 21. In some embodiments, formation of lithium dendrite may be inhibited, and thus lifespan characteristics of the lithium battery including the anode 20 may be improved. In some embodiments, the anode interlayer 22 may firmly bind the

protective layer 24, which will be described below, to the plated lithium metal to inhibit deformation and perforation of the protective layer 24 caused by non-uniform plating of lithium metal.

A mixing ratio of the lithiophilic metal and the carbonaceous material included in the anode interlayer 22 may be, for example, from about 10:1 to about 1:10, from about 10:1 to about 1:1, from about 10:1 to about 2:1, from about 5:1 to about 1:1, or from about 5:1 to about 2:1.

The anode interlayer 22 may further include a binder. The binder included in the anode interlayer 22 may be, for example, styrene butadiene rubber (SBR), polytetrafluoroethylene, polyvinylidene fluoride, polyethylene, a vinylidene fluoride/hexafluoropropylene copolymer, polyacrylonitrile, or polymethylmethacrylate, but is not limited thereto, and any binders commonly available in the art may also be used. The binder may be used alone or as a combination of a plurality of different binders. If the anode interlayer 22 does not include a binder, the anode interlayer 22 may be easily separated from the protective layer 24 or the anode current collector 21. The amount of the binder included in the anode interlayer 22 may be, for example, 5 wt% or less, from about 0.1 wt% to about 5 wt%, from about 0.1 wt% to about 3 wt%, or from about 0.1 wt% to about 1 wt% based on a total weight of the anode interlayer 22.

A thickness of the anode interlayer may be, for example, from about 0.1 μm to about 5 μm, from about 0.1 μm to about 3 μm, or from about 0.5 μm to about 5 μm, from about 0.5 μm to about 3 μm, or from about 0.5 μm to about 2 μm. If the anode interlayer is too thin, lithium dendrite formed between the anode interlayer and the anode current collector may disintegrate the anode interlayer making it difficult to improve cycle characteristics of the lithium battery. If the anode interlayer is too thick, energy density of the lithium battery including the anode 20 may decrease, making it difficult to improve cycle characteristics of thereof. As the thickness of the anode interlayer decreases, for example, a charging capacity of the anode interlayer may also decrease.

The charging capacity of the anode interlayer may be, for example, from about 0.1 % to about 50 %, from about 1 % to about 30 %, from about 1 % to about 10 %, from about 1 % to about 5 %, or from about 1 % to about 2 % based on a total charging capacity. If the charging capacity of the anode interlayer is too low, lithium dendrites formed between the anode interlayer and the anode current collector may disintegrate the anode interlayer making it difficult to improve cycle characteristics of the lithium battery. If the charging capacity of the anode interlayer is too high, energy density of the lithium battery including the anode 20 may decrease, making it difficult to improve cycle characteristics. The charging capacity of the cathode active material layer may be obtained by multiplying a charging capacity density (mAh/g) of the cathode active material by a mass of the cathode active material of the cathode active material layer. If various types of cathode active materials are used, charging capacity density×mass values for all of the cathode active materials may be calculated respectively, and a sum of the values is regarded as the charging capacity of the cathode active material layer. The charging capacity of the anode interlayer may be calculated in the same manner. That is, the charging capacity of the anode interlayer may be obtained by multiplying a charging capacity density (mAh/g) of the anode active material by a mass of the anode active material of the anode interlayer. If various types of anode active materials are used, charging capacity density×mass values for all of the anode active materials may respectively be calculated and a sum of the values may be regarded as the charging capacity of the anode interlayer. For example, the charging capacity densities of the cathode active material and the anode active material may be capacities estimated using all-solid half-cells to which lithium metal is applied as a counter electrode. The charging capacities of the cathode active material layer and the anode interlayer may directly be measured using the all-solid half-cells. The charging capacity density may be calculated by dividing the measured charging capacity by the mass of each active material. In other embodiments, a charging capacity of the cathode active material layer and the anode interlayer may be initial charging capacity measured during charging of a first cycle.

[Anode: Anode Active Material Layer]

Referring to FIG. 2, the anode 20 may further include an anode active material layer 23 disposed between the anode current collector 21 and the protective layer 24. The anode active material layer 23 may include, for example, lithium metal or a lithium alloy.

The anode active material layer 23 may include, for example, lithium foil, lithium powder, plated lithium, a carbonaceous material, or any combination thereof. The anode active material layer including lithium foil may be, for example, a lithium metal layer. The anode active material layer including lithium powder may be formed by applying a slurry including lithium powder and the binder onto the anode current collector. The binder may be a fluorine-based binder, such as polyvinylidene fluoride (PVDF). The anode active material layer may not include the carbonaceous anode active material. Therefore, the anode active material layer may be formed of a metal-based anode active material. The anode active material layer 23 may be a plated lithium metal layer. After preparing a lithium battery by assembling an anode 20 not including the anode active material layer 23, a cathode, and an electrolyte, the plated lithium metal layer, as an anode active material layer 23, may be formed between the anode current collector 21 and the anode interlayer 22 by charging.

A thickness of the anode active material layer 23 may be, for example, from about 0.1 μm to about 100 μm, from about 0.1 μm to about 80 μm, from about 1 μm to about 80 μm, or from about 10 μm to about 80 μm, but is not limited

thereto, and may be adjusted in accordance with shape, capacity, and the like of the lithium battery. If the anode active material layer 23 is too thick, structural stability of the lithium battery may deteriorate and side reactions may increase. If the anode active material layer 23 is too thin, energy density of the lithium battery may decrease. A thickness of the lithium foil may be, for example, from about 1 μm to about 50 μm, from about 1 μm to about 30 μm, or from about 10 μm to about 30 μm, or from about 10 μm to about 80 μm. If the lithium foil has a thickness within the ranges described above, lifespan characteristics of the lithium battery including the protective layer may further be improved. A particle diameter of lithium powder may be, for example, from about 0.1 μm to about 3 μm, from about 0.1 μm to about 2 μm, from about 0.1 μm to about 2 μm. If the lithium powder has a thickness within the ranges described above, lifespan characteristics of the lithium battery including the protective layer may further be improved. The thickness of the plated lithium layer may be, for example, from about 1 μm to about 80 μm, or from about 10 μm to about 80 μm.

[Lithium Battery]

A lithium battery according to embodiments may include: a cathode; the above-described anode; and an electrolyte disposed between the cathode and the anode. The lithium battery may have increased capacity and excellent lifespan characteristics by including the above-described anode.

The lithium battery may be, for example, a lithium primary battery, a lithium secondary battery, a lithium-sulfur battery, or a lithium-air battery, but is not limited thereto, and any lithium metal batteries commonly available in the art may also be used.

Although the lithium battery is prepared, for example, by the following method, the method is not limited thereto and may be adjusted according to required conditions.

(Anode)

The above-described anode is prepared.

(Cathode)

First, a cathode active material composition may be prepared by mixing a cathode active material, a conductive material, a binder, and a solvent. The prepared cathode active material composition may directly be applied onto an aluminum current collector and dried to prepare a cathode plate on which the cathode active material layer is formed. In other embodiments, a cathode plate on which a cathode active material layer may be formed is prepared by casting the cathode active material composition on a separate support and laminating a film separated from the support on an aluminum current collector.

The cathode active material may be any lithium-containing metal oxide commonly used in the art without limitation. For example, the cathode active material may include at least one composite oxide of lithium and a metal selected from cobalt, manganese, nickel, and any combination thereof, and examples thereof may be a compound represented by one of the following formulae: $Li_aA_{1-b}B_bD_2$ (wherein $0.90 \le a \le 1$ and $0 \le b \le 0.5$); $Li_aE_{1-b}B_bO_{2-c}D_c$ (wherein $0.90 \le a \le 1$, $0 \le b \le 0.5$ and $0 \le c \le 0.05$); $LiE_{2-b}B_bO_{4-c}D_c$ (wherein $0 \le b \le 0.5$ and $0 \le c \le 0.05$); $Li_aNi_{1-b-c}Co_bB_cD_\alpha$ (wherein $0.90 \le a \le 1$, $0 \le b \le 0.5$, $0 \le c \le 0.05$ and $0 < \alpha \le 2$); $Li_aNi_{1-b-c}Co_bB_cO_{2-\alpha}F_\alpha$ (wherein $0.90 \le a \le 1$, $0 \le b \le 0.5$, $0 \le c \le 0.05$ and $0 < \alpha < 2$); $Li_aNi_{1-b-c}CO_bB_cO_{2-\alpha}F_2$ (wherein $0.90 \le a \le 1$, $0 \le b \le 0.5$, $0 \le c \le 0.05$ and $0 < \alpha < 2$); $Li_aNi_{1-b-c}Mn_bB_cD_\alpha$ (wherein $0.90 \le a \le 1$, $0 \le b \le 0.5$, $0 \le c \le 0.05$ and $0 < \alpha \le 2$); $Li_aNi_{1-b-c}Mn_bB_cO_{2-\alpha}F_\alpha$ (wherein $0.90 \le a \le 1$, $0 \le b \le 0.5$, $0 \le c \le 0.05$ and $0 < \alpha < 2$); $Li_aNi_{1-b-c}Mn_bB_cO_{2-\alpha}F_2$ (wherein $0.90 \le a \le 1$, $0 \le b \le 0.5$, $0 \le c \le 0.05$ and $0 < \alpha < 2$); $Li_aNi_bE_cG_dO_2$ (wherein $0.90 \le a \le 1$, $0 \le b \le 0.9$, $0 \le c \le 0.5$ and $0.001 \le d \le 0.1$); $Li_aNi_bCo_cMn_dGeO_2$ (wherein $0.90 \le a \le 1$, $0 \le b \le 0.9$, $0 \le c \le 0.5$, $0 \le d \le 0.5$ and $0.001 \le e \le 0.1$); $Li_aNiG_bO_2$ (wherein $0.90 \le a \le 1$ and $0.001 \le b \le 0.1$); $Li_aCoG_bO_2$ (wherein $0.90 \le a \le 1$ and $0.001 \le b \le 0.1$); $Li_aMnG_bO_2$ (wherein $0.90 \le a \le 1$ and $0.001 \le b \le 0.1$); $Li_aMn_2G_bO_4$ (wherein $0.90 \le a \le 1$ and $0.001 \le b \le 0.1$); $QO_2$; $QS_2$; $LiQS_2$; $V_2O_5$; $LiV_2O_5$; $LiIO_2$; $LiNiVO_4$; $Li_{(3-f)}J_2(PO_4)_3$ (wherein $0 \le f \le 2$); $Li_{(3-f)}Fe_2(PO_4)_3$ (wherein $0 \le f \le 2$); and $LiFePO_4$.

In the formulae representing compounds above, A may be Ni, Co, Mn, or any combination thereof; B may be Al, Ni, Co, Mn, Cr, Fe, Mg, Sr, V, a rare earth element, or any combination thereof; D may be O, F, S, P, or any combination thereof; E may be Co, Mn, or any combination thereof; F may be F, S, P, or any combination thereof; G may be Al, Cr, Mn, Fe, Mg, La, Ce, Sr, V, or any combination thereof; Q may be Ti, Mo, Mn, or any combination thereof; I may be Cr, V, Fe, Sc, Y, or any combination thereof; and J may be V, Cr, Mn, Co, Ni, Cu, or any combination thereof. The above-described compound having a coating layer on the surface thereof may also be used or a mixture of the above-described compound and a compound having a coating layer may also be used. The coating layer added to the surface of the compound may include, for example, a compound of a coating element such as an oxide, hydroxide, oxyhydroxide, oxycarbonate, or hydroxycarbonate of the coating element. The compound constituting the coating layer may be amorphous or crystalline. The coating element included in the coating layer may be Mg, Al, Co, K, Na, Ca, Si, Ti, V, Sn, Ge, Ga, B, As, Zr, or any mixture thereof. A method of forming the coating layer may be selected from those not adversely affecting physical

properties of the cathode active material. The coating methods may be, for example, spray coating and dip coating. These methods may be obvious to those of ordinary skill in the art, and thus detailed descriptions thereof will not be given.

The cathode active material may be, for example, $Li_aNi_xCo_yM_zO_{2-b}A_b$ (wherein $1.0 \le a \le 1.2$, $0 \le b \le 0.2$, $0.8 \le x < 1$, $0 < y \le 0.3$, $0 < z \le 0.3$, x+y+z=1, M is manganese (Mn), niobium (Nb), vanadium (V), magnesium (Mg), gallium (Ga), silicon (Si), tungsten (W), molybdenum (Mo), iron (Fe), chromium (Cr), copper (Cu), zinc (Zn), titanium (Ti), aluminum (Al), boron (B), or any combination thereof, and A is F, S, Cl, Br, or any combination thereof), $LiNi_xCo_yMn_zO_2$ (wherein $0.8 \le x \le 0.95$, $0 \le y \le 0.2$, $0 < z \le 0.2$ and x+y+z=1), $LiNi_xCo_yAl_zO_2$ (wherein $0.8 \le x \le 0.95$, $0 \le y \le 0.2$, $0 < z \le 0.2$, and x+y+z=1), $LiNi_xCo_yMn_zAl_wO_2$ (wherein $0.8 \le x \le 0.95$, $0 \le y \le 0.2$, $0 < z \le 0.2$, $0 < w \le 0.2$, and x+y+z+w=1), $Li_aCo_xM_yO_{2-b}A_b$ (wherein $1.0 \le a \le 1.2$, $0 \le b \le 0.2$, $0.9 \le x \le 1$, $0 \le y \le 0.1$, x+y=1, M is manganese (Mn), niobium (Nb), vanadium (V), magnesium (Mg), gallium (Ga), silicon (Si), tungsten (W), molybdenum (Mo), iron (Fe), chromium (Cr), copper (Cu), zinc (Zn), titanium (Ti), aluminum (Al), boron (B), or any combination thereof, and A is F, S, Cl, Br, or any combination thereof), $Li_aNi_xMn_yM'_zO_{2-b}A_b$ (wherein $1.0 \le a \le 1.2$, $0 \le b \le 0.2$, $0 < x \le 0.3$, $0.5 \le y < 1$, $0 < z \le 0.3$, x+y+z=1, M' is cobalt (Co), niobium (Nb), vanadium (V), magnesium (Mg), gallium (Ga), silicon (Si), tungsten (W), molybdenum (Mo), iron (Fe), chromium (Cr), copper (Cu), zinc (Zn), titanium (Ti), aluminum (Al), boron (B), or any combination thereof, and A is F, S, Cl, Br, or any combination thereof), $Li_aM1_xM2_yPO_{4-b}X_b$ (wherein $0.90 \le a \le 1.1$, $0 \le x \le 0.9$, $0 \le y \le 0.5$, $0.9 < x+y < 1.1$, $0 \le b \le 2$, M1 is chromium (Cr), manganese (Mn), iron (Fe), cobalt (Co), nickel (Ni), copper (Cu), zirconium (Zr), or any combination thereof, M2 is magnesium (Mg), calcium (Ca), strontium (Sr), barium (Ba), titanium (Ti), zinc (Zn), boron (B), niobium (Nb), gallium (Ga), indium (In), molybdenum (Mo), tungsten (W), aluminum (Al), silicon (Si), chromium (Cr), vanadium (V), scandium (Sc), yttrium (Y), or any combination thereof, and X is O, F, S, P, or any combination thereof), or $Li_aM3_zPO_4$ (wherein $0.90 \le a \le 1.1$, $0.9 \le z \le 1.1$, and M3 is chromium (Cr), manganese (Mn), iron (Fe), cobalt (Co), nickel (Ni), copper (Cu), zirconium (Zr), or any combination thereof).

The conductive material may be, but is not limited to, carbon black, graphite particulates, natural graphite, artificial graphite, acetylene black, Ketjen black, carbon fiber; carbon nanotubes; metal such as copper, nickel, aluminum, and silver each of which is used in powder, fiber, or tube form; or conductive polymers such as polyphenylene derivatives, and any material commonly used in the art as conductive materials may also be used. In other embodiments, the cathode may not include a separate conductive material.

The binder may be a vinylidene fluoride/hexafluoropropylene copolymer, polyvinylidene fluoride, polyacrylonitrile, polymethylmethacrylate, polytetrafluoroethylene (PTFE), a mixture thereof, or a styrene butadiene rubber polymer. The solvent may be N-methylpyrrolidone (NMP), acetone, and water, but is not limited thereto and any solvent commonly used in the art may also be used.

A plasticizer or a pore forming agent may further be added to the cathode active material composition to form pores inside the electrode plate.

Contents of the cathode active material, the conductive material, the binder, and the solvent may be the same levels as those commonly used in lithium batteries. At least one of the conductive material, the binder, and the solvent may be omitted in accordance with a use and a configuration of the lithium battery.

A content of the binder included in the cathode may be, for example, from about 0.1 wt% to about 10 wt% or from about 0.1 wt% to about 5 wt% based on a total weight of the cathode active material layer. A content of the cathode active material included in the cathode may be, for example, from about 80 wt% to about 99 wt%, from about 90 wt% to about 99 wt%, or from about 95 wt% to about 99 wt% based on the total weight of the cathode active material layer.

(Separator)

Subsequently, a separator to be inserted between the cathode and the anode may be prepared.

Any separator commonly used in the art for lithium batteries may be used. For example, any separator having low resistance to ion migration of the electrolyte and excellent electrolyte-retaining ability may be used. For example, the separator may be selected from glass fiber, polyester, Teflon, polyethylene, polypropylene, polytetrafluoroethylene (PTFE), or any combination thereof, each of which is a non-woven or woven fabric. For example, a windable separator including polyethylene or polypropylene may be used in lithium-ion batteries and a separator having excellent organic electrolyte-retaining ability may be used in lithium-ion polymer batteries.

The separator may be prepared according to the following exemplary method. However, the method is not limited thereto and adjusted according to required conditions.

First, a polymer resin, a filler, and a solvent may be mixed to prepare a separator composition. The separator composition may directly be applied onto an electrode and dried to prepare a separator. In some embodiments, the separator composition may be cast on a support and dried and then a separator film separated from the support is laminated on an electrode to form a separator.

The polymer used to prepare the separator is not limited and any polymer commonly used as a binder for electrode plates may also be used. For example, a vinylidene fluoride/hexafluoropropylene copolymer, a polyvinylidenefluoride (PVDF), polyacrylonitrile, polymethylmethacrylate, or any mixture thereof may be used.

(Electrolyte)

Subsequently, an electrolyte may be prepared.

The electrolyte may be, for example, a liquid electrolyte, a solid electrolyte, or any combination thereof.

For example, the electrolyte may be an organic electrolytic solution. The electrolytic solution may be prepared, for example, by dissolving a lithium salt in an organic solvent.

Any organic solvent commonly used in the art may be used. For example, the organic solvent may be propylene carbonate, ethylene carbonate, fluoroethylene carbonate, butylene carbonate, dimethyl carbonate, diethyl carbonate, methylethyl carbonate, methylpropyl carbonate, ethylpropyl carbonate, methylisopropyl carbonate, dipropyl carbonate, dibutyl carbonate, benzonitrile, acetonitrile, tetrahydrofuran, 2-methyltetrahydrofuran, $\gamma$-butyrolactone, dioxorane, 4-methyldioxorane, N,N-dimethyl formamide, dimethyl acetamide, dimethylsulfoxide, dioxane, 1,2-dimethoxyethane, sulforane, dichloroethane, chlorobenzene, nitrobenzene, diethylene glycol, dimethyl ether, or any mixture thereof.

The lithium salt may also be any lithium salt commonly used in the art. For example, the lithium salt may be $LiPF_6$, $LiBF_4$, $LiSbF_6$, $LiAsF_6$, $LiClO_4$, $LiCF_3SO_3$, $Li(CF_3SO_2)_2N$, $LiC_4F_9SO_3$, $LiAlO_2$, $LiAlCl_4$, $LiN(C_xF_{2x+1}SO_2)(C_yF_{2y+1}SO_2)$ (wherein $1 \leq x \leq 20$ and $1 \leq y \leq 20$), LiCl, LiI, or any mixture thereof. A concentration of the lithium salt may be, for example, from about 0.1 M to about 5.0 M.

The solid electrolyte may be, for example, an oxide-based solid electrolyte, a sulfide-based solid electrolyte, or any combination thereof.

The solid electrolyte may be, for example, an oxide-based solid electrolyte. The oxide-based solid electrolyte may include, for example, at least one selected from $Li_{1+x+y}Al_xTi_{2-x}Si_yP_{3-y}O_{12}$ (wherein $0 < x < 2$ and $0 \leq y < 3$), $BaTiO_3$, $Pb(Zr,Ti)O_3$ (PZT), $Pb_{1-x}La_xZr_{1-y}Ti_yO_3$ (PLZT, where $0 \leq x < 1$ and $0 \leq y < 1$), $PB(Mg_3Nb_{2/3})O_3$-$PbTiO_3$ (PMN-PT), $HfO_2$, $SrTiO_3$, $SnO_2$, $CeO_2$, $Na_2O$, MgO, NiO, CaO, BaO, ZnO, $ZrO_2$, $Y_2O_3$, $Al_2O_3$, $TiO_2$, $SiO_2$, $Li_3PO_4$, $Li_xTi_y(PO_4)_3$ (wherein $0 < x < 2$ and $0 < y < 3$), $Li_xAl_yTi_z(PO_4)_3$ (wherein $0 < x < 2$, $0 < y < 1$, and $0 < z < 3$), $Li_{1+x+y}(Al, Ga)_x(Ti, Ge)_{2-x}Si_yP_{3-y}O_{12}$ (wherein $0 \leq x \leq 1$ and $0 \leq y \leq 1$), $Li_xLa_yTiO_3$ (wherein $0 < x < 2$ and $0 < y < 3$), $Li_2O$, LiOH, $Li_2CO_3$, $LiAlO_2$, $Li_2O$-$Al_2O_3$-$SiO_2$-$P_2O_5$-$TiO_2$-$GeO_2$, and $Li_{3+x}La_3M_2O_{12}$ (wherein M = Te, Nb, or Zr, and x is an integer from 1 to 10). The solid electrolyte may be manufactured by a sintering method, or the like. For example, the oxide-based solid electrolyte may be a garnet-type solid electrolyte selected from $Li_7La_3Zr_2O_{12}$ (LLZO) and $Li_{3+x}La_3Zr_{2-a}M_aO_{12}$ (M doped LLZO, wherein M=Ga, W, Nb, Ta, or Al and x is an integer from 1 to 10).

For example, the solid electrolyte may include at least one selected from lithium sulfide, silicon sulfide, phosphorous sulfide, boron sulfide, or any combination thereof. The sulfide-based solid electrolyte particles may include $Li_2S$, $P_2S_5$, $SiS_2$, $GeS_2$, $B_2S_3$ or any combination thereof. The sulfide-based solid electrolyte particles may be $Li_2S$ or $P_2S_5$. Sulfide-based solid electrolyte particles are known to have higher lithium ion conductivity than other inorganic compounds. For example, the sulfide-based solid electrolyte may include $Li_2S$ and $P_2S_5$. If a sulfide solid electrolyte material constituting the sulfide-based solid electrolyte includes $Li_2S$-$P_2S_5$, a mixing molar ratio of $Li_2S$ to $P_2S_5$ may be, for example, in the range of about 50:50 to about 90:10. In some embodiments, an inorganic solid electrolyte prepared by adding $Li_3PO_4$, a halogen atom, a halogen compound, $Li_{2+2x}Zn_{1-x}GeO_4$ ("LISICON", where $0 \leq x < 1$), $Li_{3+y}PO_{4-x}N_x$ ("LIPON", where $0 < x < 4$ and $0 < y < 3$), $Li_{3.25}Ge_{0.25}P_{0.75}S_4$ ("Thio-LISICON"), $Li_2O$-$Al_2O_3$-$TiO_2$-$P_2O_5$ ("LATP"), or the like to an inorganic solid electrolyte such as $Li_2S$-$P_2S_5$, $SiS_2$, $GeS_2$, $B_2S_3$, or any combination thereof may be used as the sulfide-based solid electrolyte. Examples of the sulfide-based solid electrolyte material may include, but are not limited to, $Li_2S$-$P_2S_5$; $Li_2S$-$P_2S_5$-LiX (wherein X is a halogen atom); $Li_2S$-$P_2S_5$-$Li_2O$; $Li_2S$-$P_2S_5$-$Li_2O$-LiI; $Li_2S$-$SiS_2$; $Li_2S$-$SiS_2$-LiI; $Li_2S$-$SiS_2$-LiBr; $Li_2S$-$SiS_2$-LiCl; $Li_2S$-$SiS_2$-$B_2S_3$-LiI; $Li_2S$-$SiS_2$-$P_2S_5$-LiI; $Li_2S$-$B_2S_3$; $Li_2S$-$P_2S_5$-$Z_mS_n$ (wherein $0 < m < 10$, $0 < n < 10$, and Z=Ge, Zn or Ga); $Li_2S$-$GeS_2$; $Li_2S$-$SiS_2$-$Li_3PO_4$; and $Li_2S$-$SiS_2$-$Li_pMO_q$ (wherein $0 < p < 10$, $0 < q < 10$, and M=P, Si, Ge, B, Al, Ga, or In). In this regard, the sulfide-based solid electrolyte material may be manufactured by treating starting materials (e.g., $Li_2S$ and $P_2S_5$) of the sulfide-based solid electrolyte by a melt quenching method, a mechanical milling method, or the like. Also, a calcination process may further be performed after the above process. The sulfide-based solid electrolyte may be in an amorphous or crystalline form or in a mixed form thereof.

(Lithium Battery)

Referring to FIG. 3, a lithium battery 1 according to embodiments may include a cathode 3, the above-described anode 2, and a separator 4. The cathode 3, the anode 2, and the separator 4 may be wound or folded to form a battery assembly. The formed battery assembly 7 may be accommodated in a battery case 5. An organic electrolytic solution may be injected into the battery case 5 and the battery case 5 may be sealed with a cap assembly 6 to complete preparation of the lithium battery 1. The battery case 5 may be a cylindrical type, but is not limited thereto, and may be for example, a rectangular type or a thin film type.

Referring to FIG. 4, a lithium battery 1 according to embodiments may include a cathode 3, the above-described anode 2, and a separator 4. The separator 4 may be disposed between the cathode 3 and the anode 2, and the cathode 3, the anode 2, and the separator 4 may be wound or folded to form a battery assembly 7. The formed battery assembly 7 may

be accommodated in a battery case 5. The lithium battery 1 may include an electrode tab 8 serving as an electrical passage for inducing a current generated in the battery assembly 7 to the outside. An organic electrolytic solution may be injected into the battery case 5 and the battery case 5 is sealed to complete preparation of the lithium battery 1. The battery case 5 may be a rectangular type, but is not limited thereto, and for example, a cylindrical type or a thin film type may also be used.

Referring to FIG. 5, a lithium battery 1 according to embodiments may include a cathode 3, the above-described anode 2, and a separator 4. The separator 4 may be disposed between the cathode 3 and the anode 2 to form a battery assembly. The battery assembly 7 may be stacked in a bi-cell structure and accommodated in a battery case 5. The lithium battery 1 may include an electrode tab 8 serving as an electrical passage for inducing a current generated in the battery assembly 7 to the outside. An organic electrolytic solution may be injected into the battery case 5 and the battery case 5 is sealed to complete preparation of the lithium battery 1. The battery case 5 may be a rectangular type, but is not limited thereto, and for example, a cylindrical type or a thin film type may also be used.

In a pouch-type lithium battery, a pouch may be used as the battery case of the lithium batteries shown in FIGS. 3 to 5. A pouch-type lithium battery may include at least one battery assembly. The separator may be disposed between the cathode and the anode to form a battery assembly. The battery assembly may be stacked in a bi-cell structure, impregnated with an organic electrolytic solution, accommodated in a pouch, and sealed to complete preparation of the pouch-type lithium battery. For example, although not shown in the drawings, the above-described cathode, anode and separator may be simply stacked in a battery assembly and accommodated in a pouch. In some embodiments, the cathode, the anode, and the separator may be wound in a jelly-roll form or folded in a battery assembly and accommodated in a pouch. Subsequently, an organic electrolytic solution may be injected into the pouch and the pouch is sealed to complete preparation of the lithium battery.

Due to excellent lifespan characteristics and high-rate characteristics, lithium batteries may be used, for example, the electric vehicles (EVs). For example, lithium batteries may be used in hybrid vehicles such as plug-in hybrid electric vehicles (PHEVs). In some embodiments, lithium batteries may be used in the fields requiring a large amount of power storage. For example, lithium batteries may be used in E-bikes and electric tools.

A plurality of lithium batteries may be stacked to form a battery module, and a plurality of battery modules constitute a battery pack. Such battery packs may be used in any device that requires high capacity and high output. For example, battery packs may be used in laptop computers, smart phones, and electric vehicles. For example, a battery module may include a plurality of batteries and a frame holding the batteries. The battery pack may include, for example, a plurality of battery modules and a bus bar connecting the battery modules. The battery module and/or the battery pack may further include a cooling device. The plurality of battery packs may be controlled by a battery management system. The battery management system may include a battery pack, and a battery control device connected to the battery pack.

[Method of Preparing Binder]

A method of manufacturing a binder according to embodiments may include preparing a third composition by mixing a first composition including a first polymer including a first functional group and at least one selected from polyamic acid and polyimide substituted with fluorine and a non-aqueous solvent with a second composition including a water-soluble second polymer including a second functional group and water; and heat-treating the third composition at a temperature of 100 °C or above to prepare a third polymer.

The first polymer, the second polymer, and the third polymer are as described above in the binder. The non-aqueous solvent included in the first composition may be a polar solvent such as N-N-methylpyrrolidone (NMP) and alcohol. The first composition may further include water. Although the second composition is an aqueous solution including water, a polar organic solvent such as alcohol that is miscible with water may further be added thereto. Therefore, the first composition may be easily mixed with the second composition. Although a heat treatment time of the third composition at a temperature of 100 °C or above is not limited, for example, the third composition may be heat-treated at a temperature of 100 °C or above for about 1 hour to about 10 hours. For example, the heat treatment time of the third composition at a temperature of 160 °C above may be from about 1 hour to about 5 hours. For example, the heat treatment time of the third composition at a temperature of 100 °C above may be from about 1 hour to about 3 hours. If the heat treatment time is too short, a cross-link may not be sufficiently formed. If the heat treatment time is too long, the degree of cross-linking may be negligible relative to the heat treatment time. However, the heat treatment temperature is too low, polyamic acid may not be cured into polyimide.

In the method of manufacturing the binder, the third composition may be a protective layer-forming composition. Therefore, the protective layer may be formed simultaneously with preparing the anode by performing heat treatment at a temperature of 100 °C or above for about 1 hour to about 10 hours after applying the third composition onto the anode current collector. For example, the protective layer may be formed simultaneously with preparing the anode by performing heat treatment at a temperature of 160 °C or above for about 1 hour to about 10 hours after applying the third composition onto the anode current collector.

In the method of manufacturing the binder, the first polymer may include an alkali metal. The first polymer may be

substituted or doped with an alkali metal. For more descriptions of the first polymer substituted or doped with an alkali metal, refer to the above-described binder.

[Method of Manufacturing Anode]

A method of manufacturing an anode according to embodiments may include: providing an anode current collector; and providing the protective layer onto the anode current collector.

The protective layer may be formed by applying the third composition including the first polymer and the second polymer described above onto the anode current collector and performing heat treatment at a temperature of 100 °C or above for about 1 hour to about 10 hours.

First, an anode current collector may be provided. For the anode current collector, refer to the above-described anode. For example, a copper foil may be provided as the anode current collector.

Subsequently, the protective layer may be provided on the anode current collector. The protective layer may be formed by a method including: preparing a third composition by mixing a first composition including a first polymer including a first functional group and at least one selected from polyamic acid and polyimide substituted with fluorine and a non-aqueous solvent with a second composition including a water-soluble second polymer including a second functional group and water; and applying the third composition onto the anode current collector and heat-treating the third composition at a temperature of 100 °C or above to form the protective layer.

The first polymer, the second polymer, and the third polymer are as described above in the binder. The non-aqueous solvent included in the first composition may be a polar solvent such as N-N-methylpyrrolidone (NMP) and alcohol. The first composition may further include water. Although the second composition is an aqueous solution including water, a polar organic solvent such as alcohol that is miscible with water may further be added thereto. Therefore, the first composition may be easily mixed with the second composition.

Although a heat treatment time of the third composition at a temperature of 100 °C or above is not limited, for example, the third composition may be heat-treated at a temperature of 100 °C or above for about 1 hour to about 10 hours. For example, after applying the third composition onto the anode current collector, the heat treatment performed at a temperature of 100 °C or above may be performed for about 1 hour to about 5 hours. For example, after applying the third composition onto the anode current collector, the heat treatment performed at a temperature of 100 °C or above may be performed for about 1 hour to about 3 hours. If the heat treatment time is too short, a cross-link may not be sufficiently formed. If the heat treatment time is too long, the degree of cross-linking may be negligible relative to the heat treatment time. However, if the heat treatment temperature is too low, polyamic acid may not be cured into polyimide.

The method of manufacturing the anode may further include introducing an anode interlayer between the anode protective layer and the anode current collector. The anode interlayer may include a lithiophilic metal. The anode interlayer may include a lithiophilic metal and a carbonaceous material. The lithiophilic metal and the carbonaceous material are as described above in the anode interlayer. For example, the anode interlayer may be formed on the anode current collector by applying nanoparticles including the lithiophilic metal onto the anode current collector by nanoparticle casting. The anode interlayer may be provided, for example, by preparing a first slurry by mixing a lithiophilic metal with a solvent, and applying to the first slurry onto the anode current collector and drying the first slurry. The solvent may be an organic solvent. The solvent may be, for example, N,N-dimethylacetamide, N-N-methylpyrrolidone (NMP), or the like, but is not limited thereto, and may be any solvents commonly used in the art. The first slurry may further include a carbonaceous material.

The method of manufacturing an anode may further include introducing an anode active material layer between the protective layer and the anode current collector. The anode active material layer may include, for example, lithium metal and/or a lithium alloy.

A method of introducing the anode active material layer between the protective layer and the anode current collector is not limited. For example, an anode active material layer may be disposed on the anode current collector before providing the protective layer onto the anode current collector. A method for disposing the anode active material layer on the anode current collector is not limited. For example, the lithium metal layer may be disposed on the anode current collector by sputtering, or the like. In some embodiments, a lithium foil may be disposed on the anode current collector and rolled. In other embodiments, a commercially available stack structure in which a lithium metal layer is stacked on a copper foil may be used. For example, a stack structure may be prepared by coating a metal substrate with a composition including lithium powder and a binder and drying the coated composition. For the lithium powder and the binder, refer to the above-described anode. In some embodiments, after preparing an anode including an anode current collector and a protective layer, and anode active material layer may be introduced between the anode current collector and the protective layer by charging. The anode active material layer may be, for example, a plated lithium layer.

Hereinafter, one or more embodiments will be described in more detail with reference to the following examples and comparative examples. However, these examples are not intended to limit the purpose and scope of the one or more embodiments.

(Preparation of Cross-linked Polymer)

Preparation Example 1: PI-F

After filling a three-neck round bottom flask with nitrogen, 9.9790 g (0.0498 mol) of 2,2'-bis(trifluoromethyl) benzidine (TFMB) and 2.5275 g (0.0166 mol) of 1,3-diaminobenzoic acid (DABA) were added thereto, and then 153 g of N-N-methylpyrrolidone (NMP) was added thereto and completely dissolved therein by using a mechanical stirrer. Subsequently, 14.4935 g (0.0664 mol) of 4,4'-(hexafluoroisopropylidene)diphthalic anhydride (6FDA) was added thereto and stirred at room temperature for 24 hours to prepare fluorine-substituted polyamic acid (6FDA/TFMB/DABA, an acid equivalent of 210 g/eq, and a weight average molecular weight Mw of about 1,000,000) represented by Formula 17 below. The fluorine-substituted polyamic acid is a random copolymer. A molar ratio of 6FDA:TFMB:DABA was 4:3:1. In Formulae 17 and 18, a molar ratio of m:n was 1:3.

Preparation Example 2: LiPI-F

After filling a three-neck round bottom flask with nitrogen, 9.9790 g (0.0498 mol) of 2,2'-bis(trifluoromethyl) benzidine (TFMB) and 2.5275 g (0.0166 mol) of 1,3-diaminobenzoic acid (DABA) were added thereto, and then 153 g of N-N-methylpyrrolidone (NMP) was added thereto and completely dissolved therein by using a mechanical stirrer. Subsequently, 14.4935 g (0.0664 mol) of 4,4'-(hexafluoroisopropylidene)diphthalic anhydride (6FDA) was added thereto and stirred at room temperature for 24 hours to prepare fluorine-substituted polyamic acid (6FDA/TFMB/DABA, an acid equivalent of 210 g/eq, and a weight average molecular weight Mw of about 1,000,000) represented by Formula 17 below. The fluorine-substituted polyamic acid was a random copolymer. A molar ratio of 6FDA:TFMB:DABA was 4:3:1. In Formulae 17 and 18, a molar ratio of m:n was 1:3.

10 g of an LiOH aqueous solution in an equivalence ratio 0.5 to carboxylic acid was added to the fluorine-substituted polyamic acid represented by Formula 17 below (6FDA/TFMB/DABA, an acid equivalent of 210 g/eq, a weight average molecular weight Mw of about 1,000,000) to prepare fluorine-substituted water-soluble polyamic acid represented by Formula 18 in which 0.5 eq. of -COOH groups, among all -COOH groups of the fluorine-substituted polyamic acid, were substituted with $-COO^-Li^+$ groups. The fluorine-substituted water-soluble polyamic acid represented by Formula 18 below and polyvinylalcohol (a weight average molecular weight Mw of 78,000, a saponification degree of 88%, and Polysciences, 15132) were mixed in a weight ratio of 20:80 and heat-treated in a vacuum oven at 180 °C for 2 hours for cross-linking reaction, thereby preparing a cross-linked polymer. As the carboxyl group of the fluorine-substituted polyamic acid reacted with the hydroxyl group of polyvinylalcohol to form an ester linker, the cross-linked polymer of the fluorine-substituted polyimide and the polyvinylalcohol was prepared. The cross-linked polymer had a three-dimensional network structure in which polyimide is cross-linked to polyvinylalcohol at a plurality of sites.

<Formula 17>

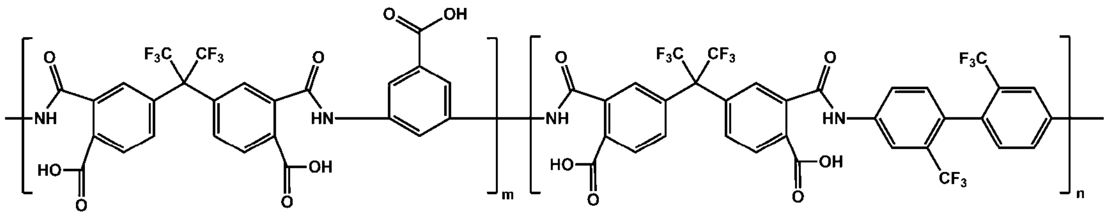

<Formula 18>

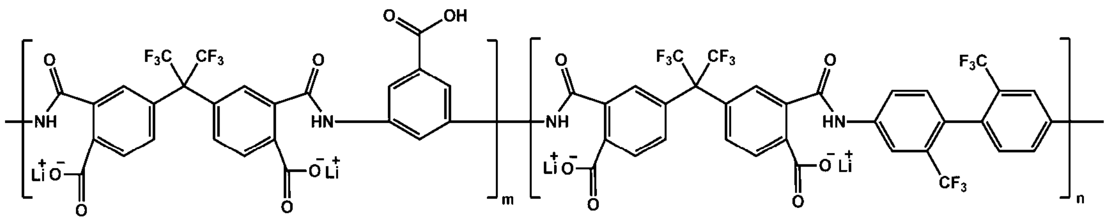

Comparative Preparation Example 1: PI

Polyamic acid represented by Formula 19 below was prepared in the same manner as in Example 1, except that

2,2'-dimethylbenzidine, which did not include fluorine, was used instead of 2,2'-bis(trifluoromethyl)benzidine and 4,4'-(isopropylidene)diphthalic anhydride, which did not include fluorine, was used instead of 4,4'-(hexafluoroisopropylidene)diphthalic anhydride in comparison with Example 1.

<Formula 19>

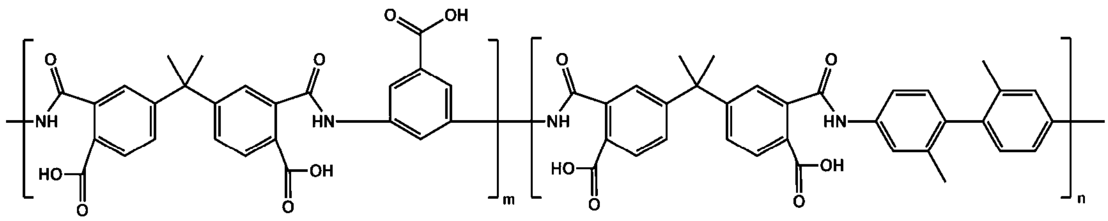

Comparative Preparation Example 2: PVA

Polyvinylalcohol used in Example 1 was used.

Comparative Preparation Example 3: SBR/CMC

A mixture of styrene butadiene rubber (SBR) and carboxymethyl cellulose (CMC) mixed in a weight ratio of 1:1 was prepared.

(Preparation of Anode and Lithium Battery)

Example 1: Cu substrate/ PI-F:PVA=20:80 protective layer (1 μm)

(Preparation of Anode)

The fluorine-substituted polyamic acid represented by Formula 17 and prepared in Preparation Example 1 was added to N,N-dimethyl acetamide (DMAc, 99%, Sigma-Aldrich) and stirred overnight at 60 °C to prepare a first composition.

Polyvinylalcohol (weight average molecular weight Mw of 78,000, a saponification degree of 88%, and Polysciences, 15132) was added to N,N-dimethyl acetamide (DMAc, 99%, Sigma-Aldrich) and stirred overnight at 60 °C to prepare a second composition.

The first composition was mixed with the second composition such that a weight ratio of the fluorine-substituted polyamic acid to the polyvinylalcohol was 20:80 to prepare a third composition.

Subsequently, heat treatment was performed in a vacuum oven at 180 °C for 2 hours for cross-linking reaction to prepare a cross-linked polymer. As the carboxyl group of the fluorine-substituted polyamic acid reacted with the hydroxyl group of polyvinylalcohol to form an ester linker, the cross-linked polymer of the fluorine-substituted polyimide and the polyvinylalcohol was prepared The cross-linked polymer had a three-dimensional network structure in which polyimide is cross-linked to polyvinylalcohol at a plurality of sites.

The third composition was applied to a 20 μm-thick copper (Cu) current collector by using a doctor blade and the solvent was removed therefrom at 140 °C for 6 hours to introduce a protective layer.

An anode having an anode current collector/protective layer structure was prepared. The protective layer had a thickness of 1 μm.

(Preparation of Coin Cell)

A coin cell was prepared by using a 20 μm-thick lithium foil as a counter electrode, disposing a polypropylene separator (Celgard 3510) between the counter electrode and the anode, and injecting an electrolyte thereinto.

A solution of 1.15 M LiPF6 dissolved in a mixed solvent of ethylene carbonate (EC)+ ethylmethyl carbonate (EMC)+dimethyl carbonate (DMC) (volume ratio of 2:4:4) was used as the electrolyte.

Example 2: Cu substrate/ PI-F:PVA=20:80 protective layer (0.5 μm)

A coin cell was prepared in the same manner as in Example 1, except that the thickness of the protective layer was 0.5 μm.

Example 3: Cu substrate/ PI-F:PVA=20:80 protective layer (0.3 μm)

A coin cell was prepared in the same manner as in Example 1, except that the thickness of the protective layer was 0.3 μm.

Example 4: Cu substrate/ PI-F:PVA=20:80 protective layer (1.5 μm)

A coin cell was prepared in the same manner as in Example 1, except that the thickness of the protective layer was 1.5 μm.

Example 5: Cu substrate/ PI-F:PVA=20:80 protective layer (3 μm)

A coin cell was prepared in the same manner as in Example 1, except that the thickness of the protective layer was 3 μm.

Example 6: Cu substrate/ PI-F:PVA=20:80 protective layer (5 μm)

A coin cell was prepared in the same manner as in Example 1, except that the thickness of the protective layer was 5 μm.

Example 7: Cu substrate/ LiPI-F:PVA=20:80 protective layer (1 μm)

A coin cell was prepared in the same manner as in Example 1, except that the fluorine-substituted water-soluble polyamic acid represented by Formula 18 and prepared in Preparation Example 2 was used instead of the fluorine-substituted polyamic acid represented by Formula 17 and prepared in Preparation Example 1.

Comparative Example 1: Cu substrate/ PI:PVA=20:80 protective layer (1 μm)

A coin cell was prepared in the same manner as in Example 1, except that the polyamic acid represented by Formula 19 and prepared in Comparative Preparation Example 1 was used instead of the fluorine-substituted polyamic acid represented by Formula 17 and prepared in Preparation Example 1.

Comparative Example 2: Cu substrate/ PVA protective layer (1 μm)

A coin cell was prepared in the same manner as in Example 1, except that the polyvinyl alcohol prepared in Comparative Preparation Example 2 was used instead of the fluorine-substituted polyamic acid represented by Formula 17 and prepared in Preparation Example 1.

Comparative Example 3: Cu substrate/ SBR-CMC protective layer (1 μm)

A coin cell was prepared in the same manner as in Example 1, except that SBR-CMC prepared in Comparative Preparation Example 3 was used instead of the fluorine-substituted polyamic acid represented by Formula 17 and prepared in Preparation Example 1.

Comparative Example 4: Cu substrate/ protective layer-free

A coin cell was prepared in the same manner as in Example 1, except that the anode did not include a protective layer.

Evaluation Example 1: Evaluation of Physical Properties of Protective Layer

After preparing a polymer film with a size of 5×5 $cm^2$ and a thickness of 50 μm on a glass substrate by using the protective layers prepared in Example 1 and Comparative Examples 1 to 3, mechanical properties of the polymers were evaluated as follows.

Extension, recovery, modulus, and hardness of the protective layers prepared in Example 1 and Comparative Examples 1 to 3 were measured by using a microindenter (DUH-211, Shimadzu). A force applied to the polymer film sample was 10 mN.

Measurement results are shown in Table 1 below. The extension is a distance of a tip of the microindenter moved

into the sample until a constant force is applied to the tip, and the recovery is a ratio of a distance of the tip moved in a direction toward the surface from a farthest point from the surface to a point at which the force applied to the tip was zero relative to the distance of the tip moved into the sample. The modulus was indentation modulus, and the hardness was indentation hardness, which were calculated from the force applied to the tip of each sample in accordance with a moving direction of the tip of the microindenter.

Table 1

| | Type | Extension [mm] | Recovery [%] | Modulus [GPa] | Hardness [N/mm2] |
|---|---|---|---|---|---|
| Example 1 | PI-F:PVA=20:80 | 0.39 | 68.6 | 38.1 | 1578 |
| Comparative Example 1 | PI:PVA=20:80 | 0.37 | 65.3 | 34.3 | 1754 |
| Comparative Example 2 | PI:PVA=0:100 | 0.33 | 66.5 | 29.5 | 1695 |
| Comparative Example 3 | SBR/CMC | 1.23 | 53.9 | 4.2 | 169 |

As shown in Table 1, the protective layer of Example 1 had increased stiffness of the binder because the modulus, i.e., Young's modulus, was greater than that of the protective layers of Comparative Examples 1 to 3, and thus expansion of the anode was inhibited.

Evaluation Example 2: Evaluation of Charging/discharging Characteristics

Each of the lithium batteries (coin cells) prepared in Examples 1 to 7 and Comparative Examples 1 to 4 was charged at a constant current of 0.1 C rate at 25 °C until a voltage reached 0.01 V (vs. Li) and charged at a constant voltage of 0.01 V until the current reached 0.01 C. The charged lithium battery was rested for 10 minutes and discharged at a constant current of 0.1 C until the voltage reached 1.5 V (vs. Li) ($1^{st}$ cycle).

Then, the lithium battery was charged at a constant current of 0.2 C rate until the voltage reached 0.01 V (vs. Li) and charged at a constant voltage of 0.01 V until the current reached 0.01 C. The charged coin cell was rested for 10 minutes and discharged at a constant current of 0.2 C until the voltage reached 1.5 V (vs. Li) ($2n^{d}$ cycle)($1^{st}$ to $2^{nd}$ cycles correspond to formation process).

The coin cell that had undergone the formation process was charged at a constant current of 1.0 C rate at 25 °C until the voltage reached 0.01 V (vs. Li) and charged at a constant voltage of 0.01 V until the current reached 0.01 C. The charged coin cell was rested for 10 minutes and discharged at a constant current of 1.0 C until the voltage reached 1.5 V (vs. Li), and this cycle was repeated 50 times. Some results of the charging/discharging test were shown in Table 2 below.

Electrode thickness expansion rate, initial efficiency, and capacity retention ratio were calculated from Equations 1 to 3 below, respectively. **In** the electrode thickness expansion rate, the electrode was an anode.

Thickness expansion rate (%)=[Thickness of electrode of disassembled battery after charging at $2^{nd}$ cycle/ Thickness of electrode before assembling battery]×100. Equation 1

Initial efficiency [%]=[Discharging capacity at $1^{st}$ cycle/ Charging capacity at $1^{st}$ cycle]×100 Equation 2

Capacity retention ratio [%]=[Discharging capacity at $53^{rd}$ cycle/ Discharging capacity $3^{rd}$ cycle]×100 Equation 3

Table 2

| | Protective layer | | Initial efficienc y [%] | Discharg e capacity at $1^{st}$ cycle [mAh/g] | Capacit y retentio n ratio [%] | Electrode thickness expansio n rate [%] |
|---|---|---|---|---|---|---|
| | Type | Thicknes s (μm) | | | | |
| Example 1 | PI-F:PVA=20:80 | 1 | 94.1 | 23.3 | 87.5 | 240 |
| Example 2 | PI-F:PVA=20:80 | 0.5 | 92.8 | 23.1 | 82.1 | 250 |
| Example 3 | PI-F:PVA=20:80 | 0.3 | 91.2 | 22.8 | 77.6 | 260 |

(continued)

| | Protective layer | | Initial efficienc y [%] | Discharg e capacity at 1st cycle [mAh/g] | Capacit y retentio n ratio [%] | Electrode thickness expansio n rate [%] |
|---|---|---|---|---|---|---|
| | Type | Thicknes s (μm) | | | | |
| Example 4 | PI-F:PVA=20:80 | 1.5 | 93.7 | 23.3 | 89.7 | 235 |
| Example 5 | PI-F:PVA=20:80 | 3 | 91.0 | 22.7 | 69.2 | 260 |
| Example 7 | LiPI-F:PVA=20:80 | 1 | 94.3 | 22.9 | 90.1 | 240 |
| Comparativ e Example 1 | PI:PVA=20:8 0 | 1 | 90.8 | 21.2 | 85.4 | 330 |
| Comparativ e Example 2 | PI:PVA=0:10 0 | 1 | 10.5 | 5.3 | N/A | 350 |
| Comparativ e Example 3 | SBR/CMC | 1 | 55.9 | 17.7 | 65.5 | 410 |
| Comparativ e Example 4 | No protective layer | - | 94.0 | 23.1 | 88.3 | 450 |

As shown in Table 2, in the lithium batteries of Examples 1 to 7, stable solid electrolyte interphase (SEI) was formed during initial plating, and thus the electrode thickness expansion rate decreased with maintained or improved initial efficiency and discharging capacity at the 1st cycle, compared to the lithium batteries of Comparative Examples 1 to 4.

**List of Reference Numerals for Major Elements**

1: lithium metal battery 2: anode
3: cathode 4: separator
5: battery case 6: cap assembly

**Claims**

1. A binder comprising a third polymer as a cross-linked product of a first polymer and a water-soluble second polymer, wherein the first polymer includes a first functional group and at least one selected from polyamic acid and polyimide each substituted with fluorine, and the water-soluble second polymer includes a second functional group, wherein the first polymer is cross-linked to the second polymer by an ester bond formed via a reaction between the first functional group and the second functional group.

2. The binder as claimed in claim 1, wherein the first functional group and the second functional group are each independently selected from a carboxyl group, an amide group, an aldehyde group, and a hydroxyl group.

3. The binder as claimed in claim 1, wherein the first polymer comprises an alkali metal.

4. The binder as claimed in claim 3, wherein a content of the alkali metal included in the first polymer is about 0.2 to about 1.0 in an equivalence ratio to a carboxyl group or an amide group.

5. The binder as claimed in claim 1, wherein the polyimide is represented by Formula 1 or 2 below:

<Formula 1>

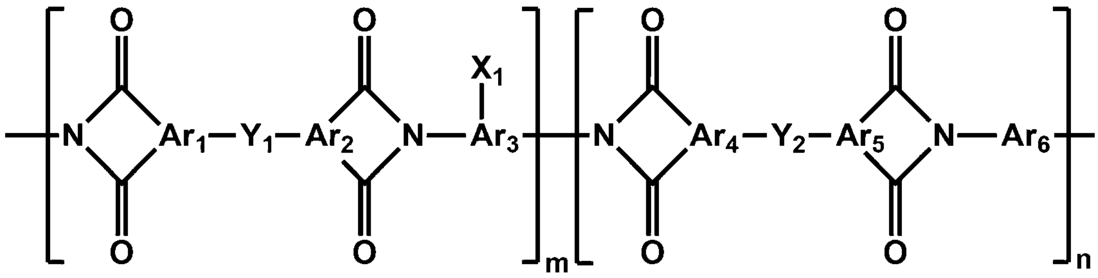

<Formula 2>

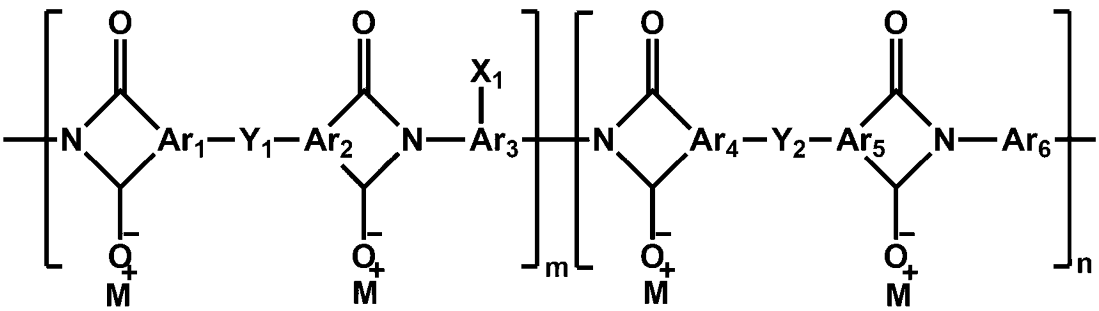

wherein in Formulae 1 and 2,

M is an alkali metal,
$Ar_1$, $Ar_2$, $Ar_4$, and $Ar_5$ are each independently an aromatic cyclic group selected from: a trivalent C6-C24 arylene group unsubstituted or substituted with a halogen atom or a C1-C10 alkyl group unsubstituted or substituted with a halogen atom; and a trivalent C4-C24 heteroarylene group unsubstituted or substituted with a halogen atom or a C1-C10 alkyl group unsubstituted or substituted with a halogen atom,
wherein the aromatic cyclic group is a single aromatic ring, a fused ring of two or more aromatic rings, or a linked ring in which two or more aromatic rings are linked via a single bond, -O-, -S-, -C(=O)-, $-S(=O)_2-$, -Si(Ra)(Rb)-(wherein Ra and Rb are each independently a C1-C10 alkyl group), a C1-C10 alkylene group unsubstituted or substituted with a halogen atom, or - C(=O)-NH-O,
$Ar_3$ and $Ar_6$ are each independently an aromatic cyclic group selected from: a divalent C6-C24 arylene group unsubstituted or substituted with fluorine or a C1-C10 alkyl group unsubstituted or substituted with fluorine; and a divalent C4-C24 heteroarylene group unsubstituted or substituted with fluorine or a C1-C10 alkyl group unsubstituted or substituted with fluorine, wherein the aromatic cyclic group is a single aromatic ring, a fused ring of two or more aromatic rings, or a linked ring of two or more aromatic rings linked via a single bond, -O-, -S-, -C(=O)-, $-S(=O)_2-$, -Si(Ra)(Rb)- (wherein Ra and Rb are each independently a C1-C10 alkyl group), a C1-C10 alkylene group unsubstituted or substituted with a halogen atom, or - C(=O)-NH-,
$X_1$ is -COOH, -OH, $-CO-NH_2$, or -COH,
$Y_1$ and $Y_2$ are each independently a C1-C10 alkylene group substituted with fluorine; and
each of n and m is a mole fraction in a repeating unit satisfying $0 < n < 1$, $0 < m < 1$, and $n+m=1$.

**6.** The binder as claimed in claim 1, wherein the polyimide is represented by Formula 3 or 4 below:

<Formula 3>

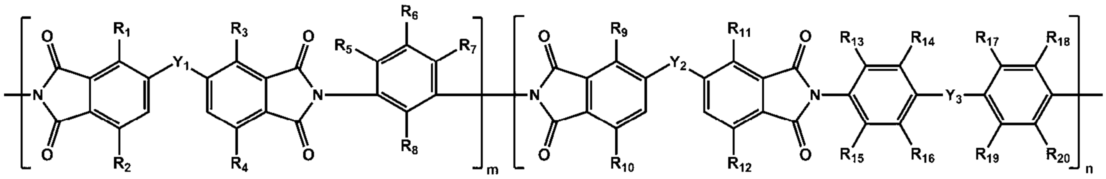

<Formula 4>

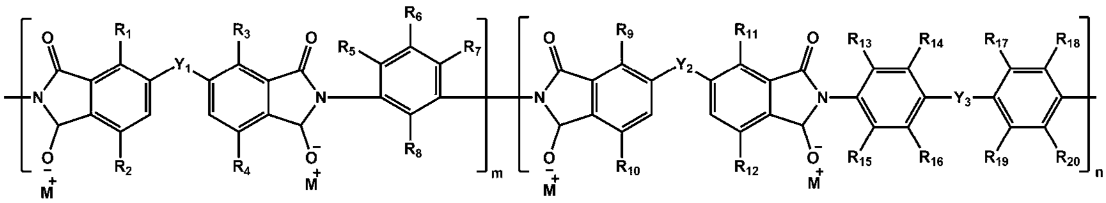

wherein in Formulae 3 and 4,

M is lithium or sodium,
$R_1$ to $R_{20}$ are each independently: a halogen atom; -COOH; -OH; -CO-$NH_2$; -COH; a C1-C10 alkyl group unsubstituted or substituted with a halogen atom; a C6-C20 aryl group unsubstituted or substituted with a halogen atom; or a C2-C20 heteroaryl group unsubstituted or substituted with a halogen atom,
wherein at least one of $R_5$ to $R_8$ is -COOH, -OH, -CO-$NH_2$, or -COH,
at least one of $R_{13}$ to $R_{20}$ is a C1-C10 alkyl group substituted with fluorine,
$Y_1$ to $Y_3$ are each independently a single bond or a C1-C10 alkylene group substituted with fluorine; and
each of n and m is a mole fraction in a repeating unit satisfying $0 < n < 1$, $0 < m < 1$, and $n+m=1$.

**7.** The binder as claimed in claim 1, wherein the polyamic acid is represented by Formula 7 or 8 below:

<Formula 7>

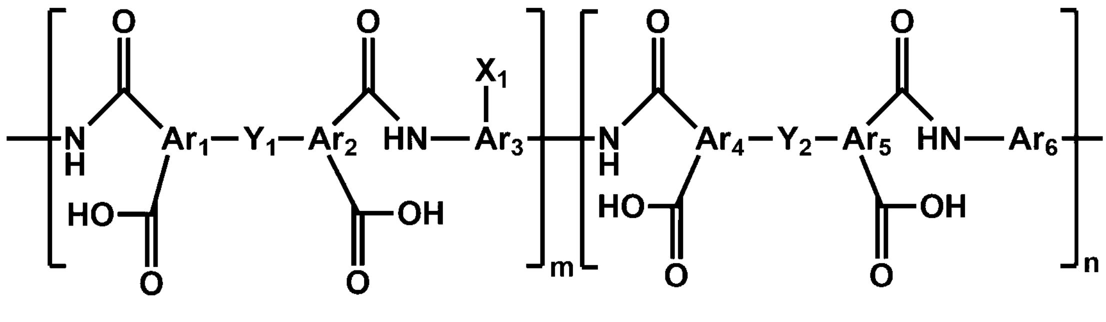

<Formula 8>

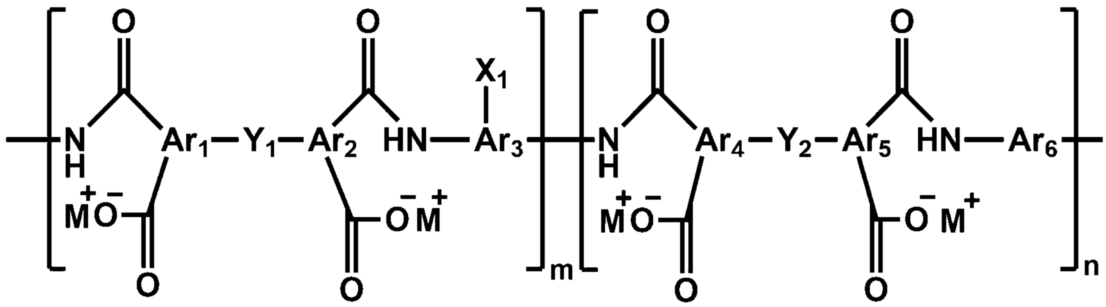

wherein in Formulae 7 and 8,

M is an alkali metal,
$Ar_1$, $Ar_2$, $Ar_4$, and $Ar_5$ are each independently an aromatic cyclic group selected from: a trivalent C6-C24 arylene group unsubstituted or substituted with a halogen atom or a C1-C10 alkyl group unsubstituted or substituted with a halogen atom; and a trivalent C4-C24 heteroarylene group unsubstituted or substituted with a halogen atom or a C1-C10 alkyl group unsubstituted or substituted with a halogen atom,
wherein the aromatic cyclic group is a single aromatic ring, a fused ring of two or more aromatic rings, or a linked ring of two or more aromatic rings linked via a single bond, -O-, -S-, -C(=O)-, $-S(=O)_2-$, -Si(Ra)(Rb)- (wherein Ra and Rb are each independently a C1-C10 alkyl group), a C1-C10 alkylene group unsubstituted or substituted with a halogen atom, or - C(=O)-NH-O,
$Ar_3$ and $Ar_6$ are each independently an aromatic cyclic group selected from: a divalent C6-C24 arylene group unsubstituted or substituted with fluorine or a C1-C10 alkyl group unsubstituted or substituted with fluorine; and a divalent C4-C24 heteroarylene group unsubstituted or substituted with fluorine or a C1-C10 alkyl group unsubstituted or substituted with fluorine, wherein the aromatic cyclic group is a single aromatic ring, a fused ring of two or more aromatic rings, or a linked ring of two or more aromatic rings linked via a single bond, -O-, -S-, -C(=O)-, $-S(=O)_2-$, -Si(Ra)(Rb)- (wherein Ra and Rb are each independently a C1-C10 alkyl group), a C1-C10 alkylene group unsubstituted or substituted with a halogen atom, or - C(=O)-NH-,
$X_1$ is -COOH, -OH, $-CO-NH_2$, or -COH,
$Y_1$ is a C1-C10 alkylene group substituted with fluorine; and
each of n and m is a mole fraction in a repeating unit satisfying $0 < n < 1$, $0 < m < 1$, and n+m=1.

**8.** The binder as claimed in claim 1, wherein the polyamic acid is represented by Formula 9 or 10 below:

<Formula 9>

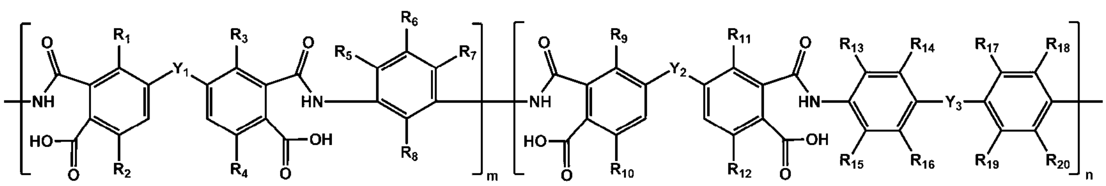

<Formula 10>

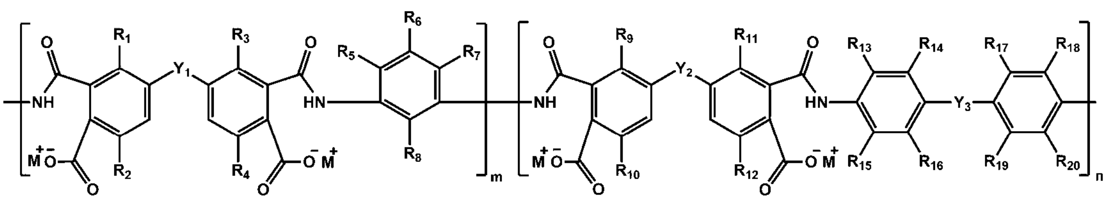

wherein in Formulae 9 and 10,

M is lithium or sodium,
$R_1$ to $R_{20}$ are each independently hydrogen; a halogen atom; -COOH; - OH; -CO-$NH_2$; -COH; a C1-C10 alkyl group unsubstituted or substituted with a halogen atom; a C6-C20 aryl group unsubstituted or substituted with a halogen atom; or a C2-C20 heteroaryl group unsubstituted or substituted with a halogen atom,
at least one of $R_5$ to $R_8$ is -COOH, -OH, -CO-$NH_2$, or -COH,
at least one of $R_{13}$ to $R_{20}$ is a C1-C10 alkyl group substituted with fluorine, $Y_1$ to $Y_3$ are each independently a single bond or a C1-C10 alkylene group substituted with fluorine; and
each of n and m is a mole fraction in a repeating unit satisfying $0 < n < 1$, $0 < m < 1$, and $n+m=1$.

**9.** The binder as claimed in claim 1, wherein the polyimide is represented by Formula 5 or 6 below, and the polyamic acid is represented by Formula 11 or 12 below:

<Formula 5>

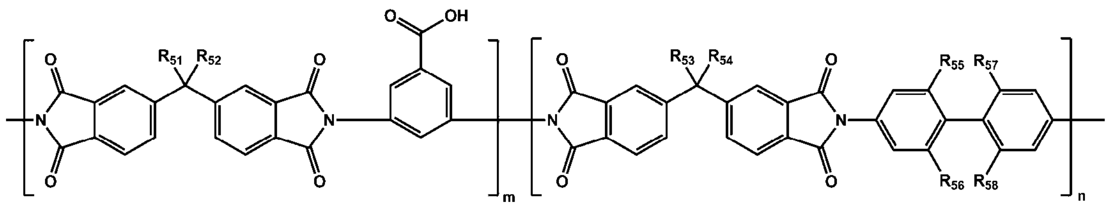

<Formula 6>

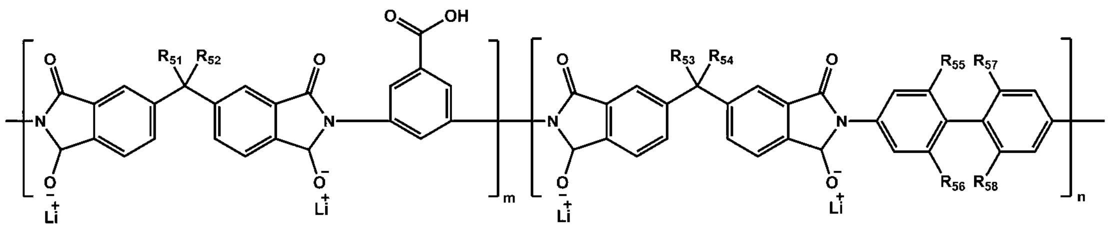

<Formula 11>

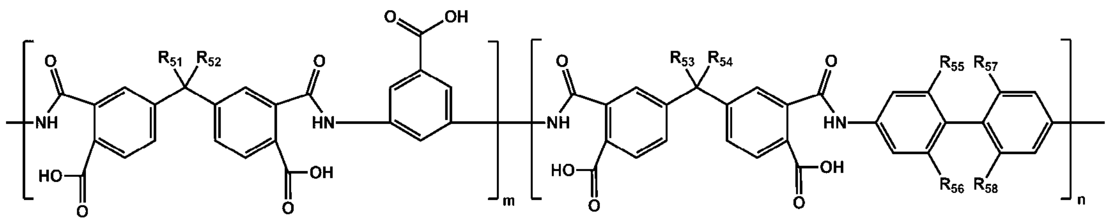

<Formula 12>

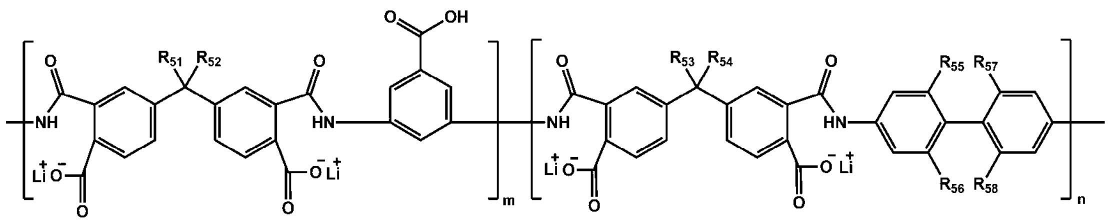

wherein in Formulae 5, 6, 11, and 12,

$R_{51}$ to $R_{58}$ are each independently a C1-C10 alkyl group unsubstituted or substituted with fluorine (F), at least one of $R_{51}$ to $R_{58}$ is a C1-C10 alkyl group substituted with fluorine, and each of n and m is a mole fraction in a repeating unit satisfying $0 < n < 1$, $0 < m < 1$, and $n+m=1$.

**10.** The binder as claimed in claim 9, wherein $0 < m < 0.5$, $0.5 < n < 1$, and $n+m=1$ are satisfied.

**11.** The binder as claimed in claim 1, wherein the second polymer is a polymerization product of at least one monomer selected from vinyl monomers, acetate monomers, alcohol monomers, acrylic monomers, methacrylic monomers, acrylamide monomers, and methacrylamide monomers, or a hydrolysate thereof.

**12.** The binder as claimed in claim 1, wherein the second polymer is a polymerization product of at least one monomer selected from vinyl acetate, vinyl alcohol, butyl (meth)acrylate, 2-hydroxyethyl (meth)acrylate, 2-hydroxypropyl (meth)acrylate, 4-hydroxybutyl (meth)acrylate, 6-hydroxyhexyl (meth)acrylate, 8-hydroxyoctyl (meth)acrylate, 2-hydroxyethyleneglycol (meth)acrylate, 2-hydroxypropyleneglycol (meth)acrylate, acrylic acid, methacrylic acid, 2-(meth)acryloyloxy acetic acid, 3-(meth)acryloyloxy propyl acid, 4-(meth)acryloyloxy butyl acid, itaconic acid, maleic acid, 2-isocyanatoethyl (meth)acrylate, 3-isocyanatopropyl (meth)acrylate, 4-isocyanatobutyl (meth)acrylate, (meth) acrylamide, ethylenedi(meth)acrylate, diethyleneglycol(meth)acrylate, triethyleneglycoldi(meth)acrylate, trimethylenepropanetri(meth)acrylate, trimethylenepropanetriacrylate, 1,3-butanediol(meth)acrylate, 1,6-hexanedioldi(meth)acrylate, allylacrylate, and N-vinyl caprolactam, or a hydrolysate thereof.

**13.** The binder as claimed in claim 1, wherein the second polymer is polyvinylalcohol.

**14.** The binder as claimed in claim 1, wherein a weight ratio of the first polymer to the second polymer is about 1:99 to about 50:50.

**15.** The binder as claimed in claim 1, wherein the third polymer is represented by one of Formulae 13 to 16 below:

<Formula 13>

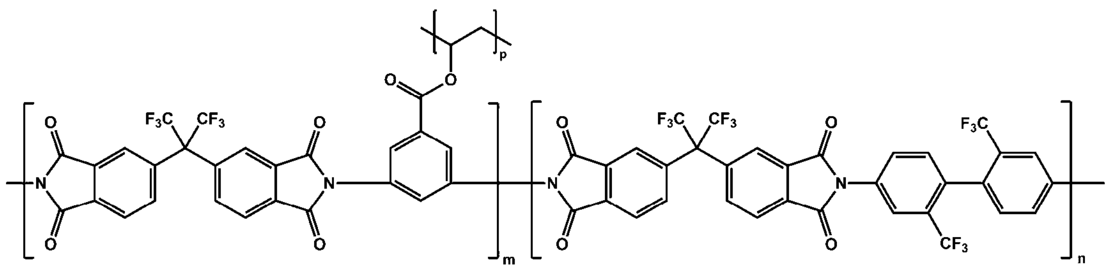

<Formula 14>

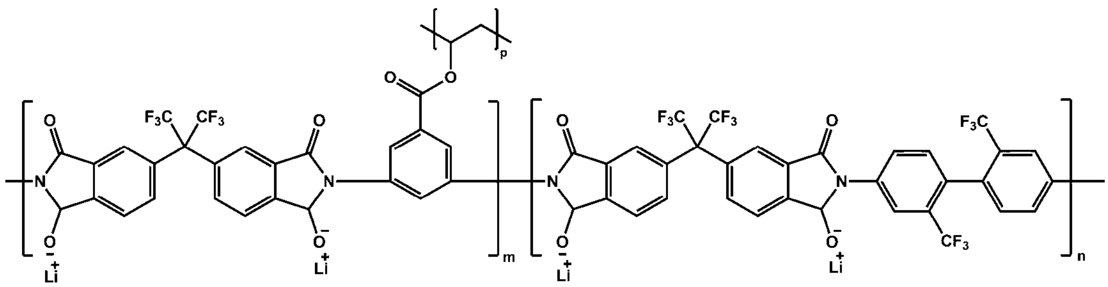

<Formula 15>

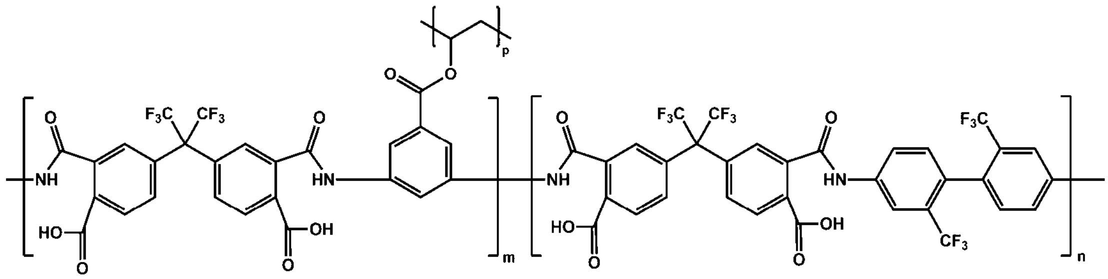

<Formula 16>

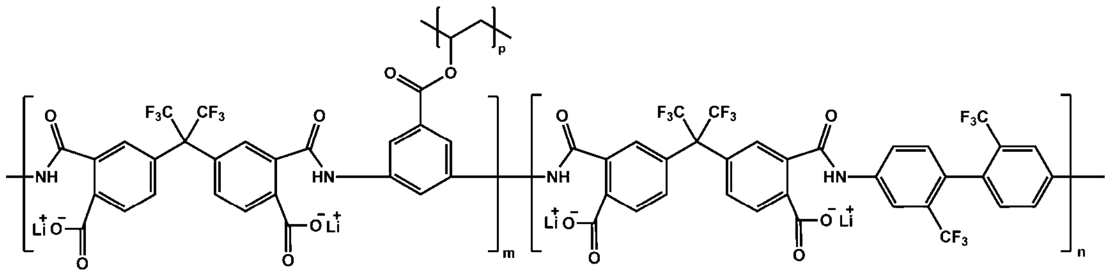

wherein in Formulae 13 to 16, each of n and m is a mole fraction in a repeating unit satisfying $0 < n < 1$, $0 < m < 1$, and $n+m=1$, and p, as a degree of polymerization, is about 250 to about 12500.

**16.** An anode comprising:

an anode current collector; and
a protective layer disposed on the anode current collector and comprising the binder as claimed in claim 1.

**17.** The anode as claimed in claim 16, wherein the protective layer has a thickness of 5 $\mu$m or less.

**18.** The anode as claimed in claim 16, wherein the anode current collector comprises a base film and a metal layer disposed on one or both sides of the base film,

wherein the base film comprises a polymer, the polymer comprising polyethyleneterephthalate (PET), polyethylene (PE), polypropylene (PP), polybutyleneterephthalate (PBT), polyimide (PI), or a combination thereof, and
the metal layer comprises indium (In), copper (Cu), magnesium (Mg), stainless steel, titanium (Ti), iron (Fe), cobalt (Co), nickel (Ni), zinc (Zn), aluminum (Al), germanium (Ge), lithium (Li), or an alloy thereof.

**19.** A lithium battery comprising:

a cathode;
the anode as claimed in claim 16; and
an electrolyte disposed between the cathode and the anode.

**20.** The lithium battery as claimed in claim 19, wherein the electrolyte is a liquid electrolyte, a solid electrolyte, or a combination thereof.

FIG. 1

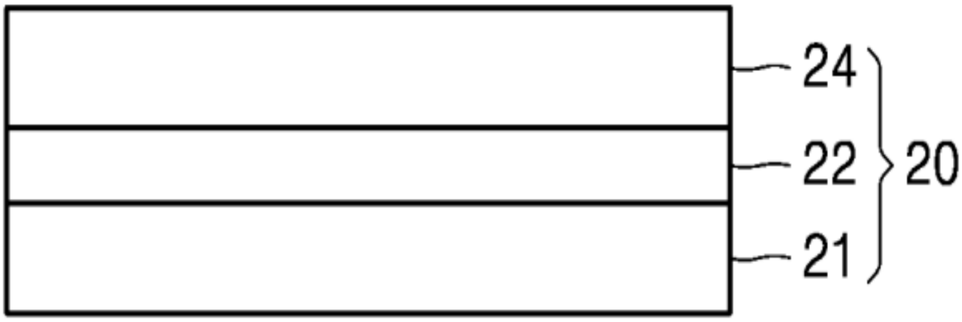


FIG. 2

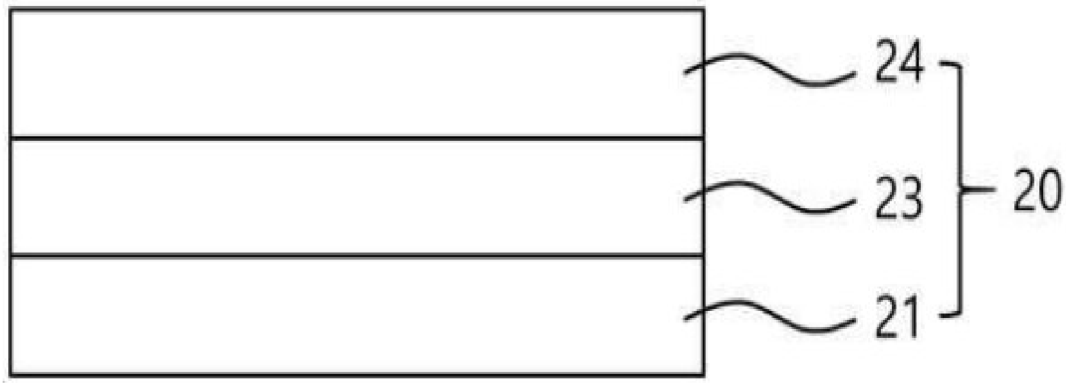

FIG. 3

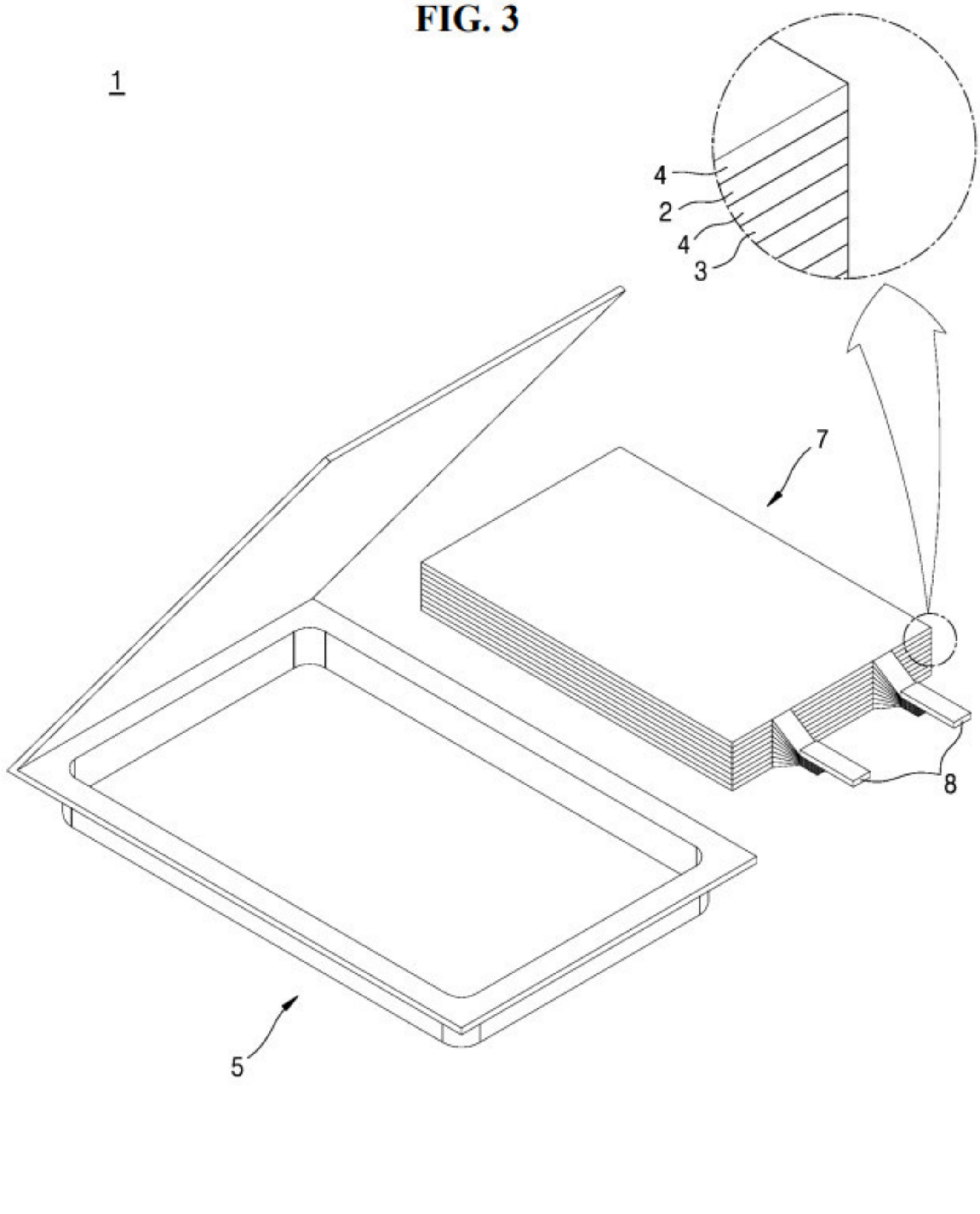

FIG. 4

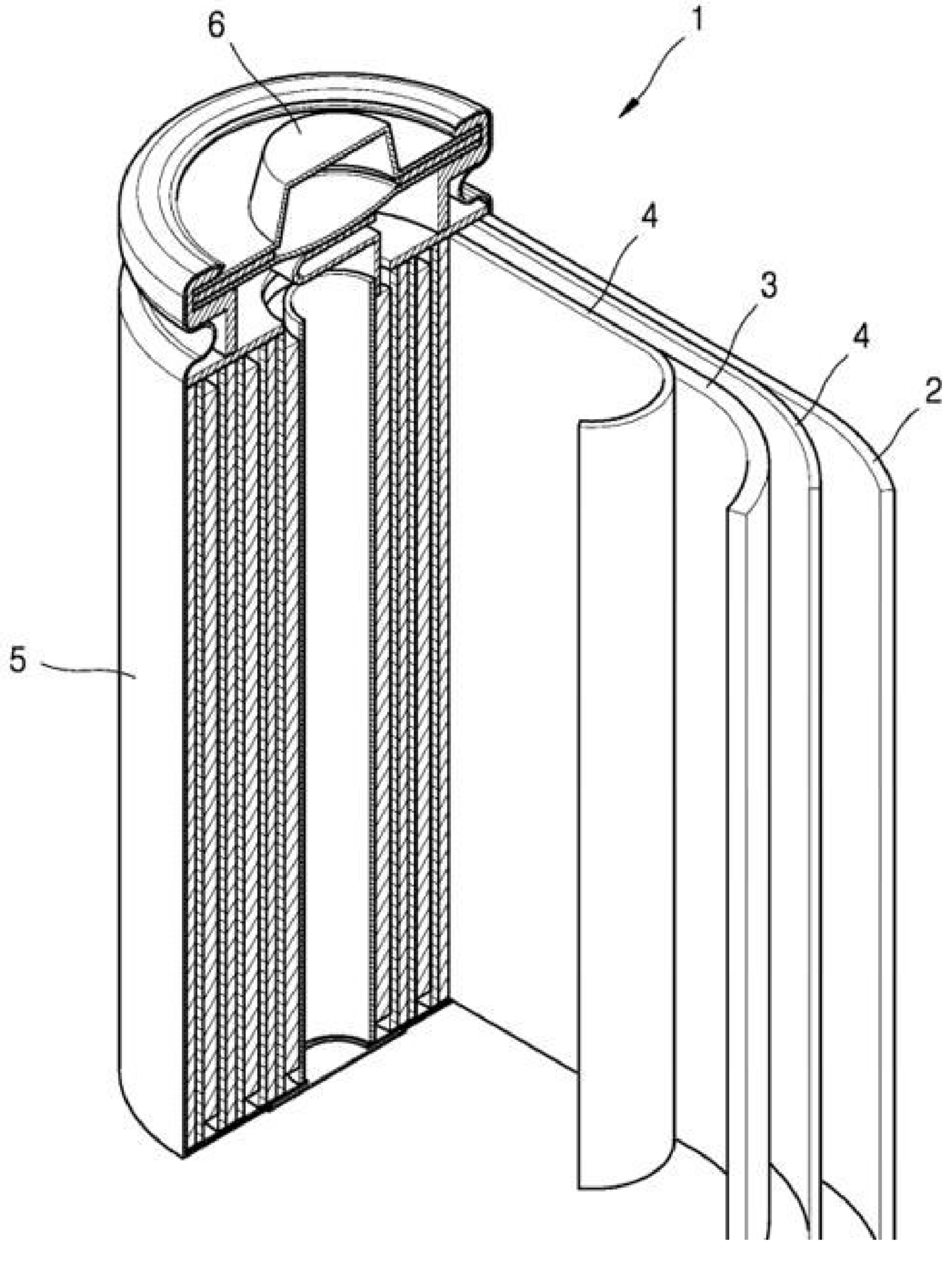

FIG. 5

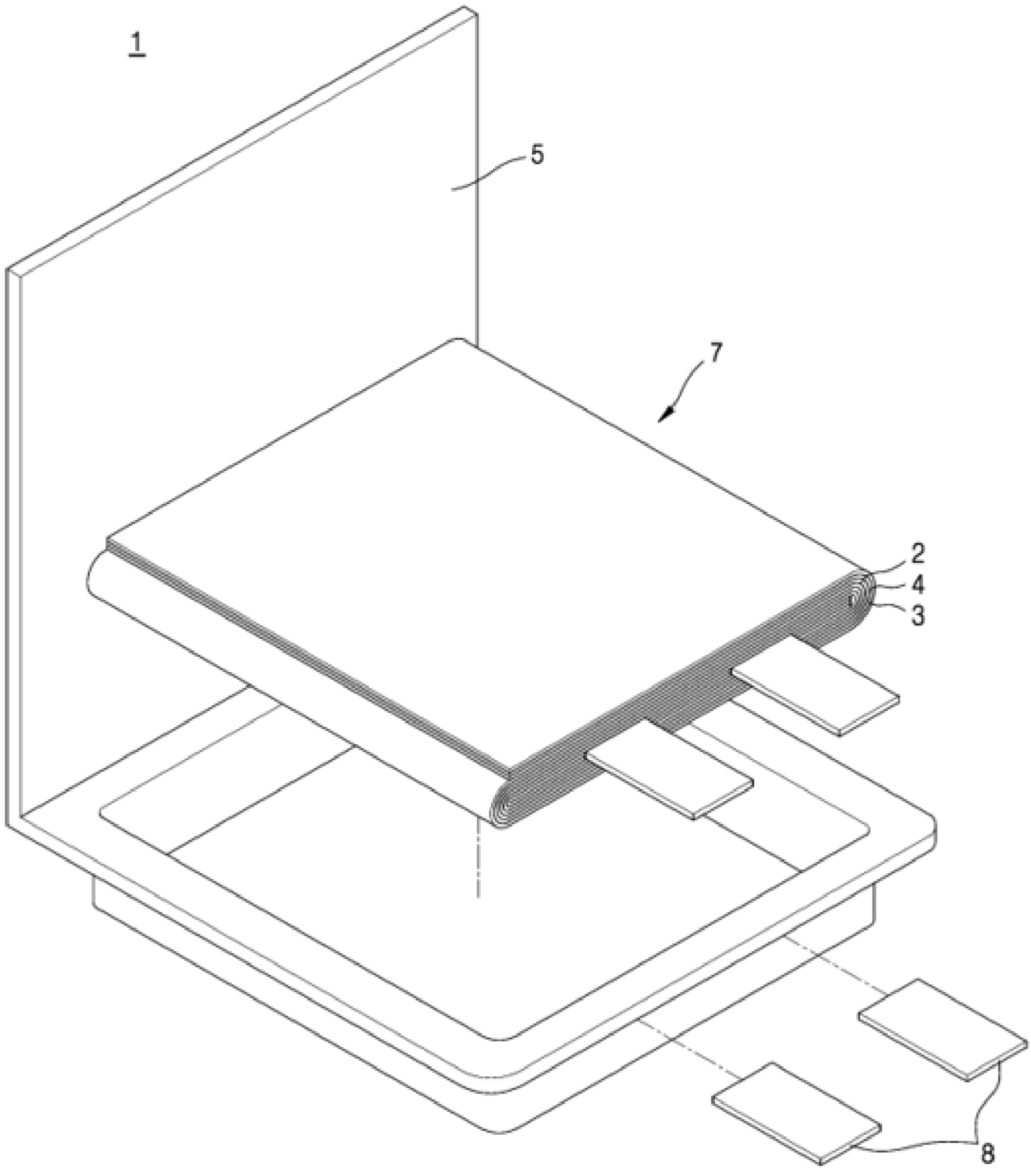

## INTERNATIONAL SEARCH REPORT

International application No.
**PCT/KR2024/003728**

**A. CLASSIFICATION OF SUBJECT MATTER**

**H01M 4/62**(2006.01)i; **H01M 4/13**(2010.01)i; **H01M 10/42**(2006.01)i; **H01M 10/052**(2010.01)i; **C08G 73/10**(2006.01)i; **C08J 3/24**(2006.01)i; **H01M 4/02**(2006.01)i

According to International Patent Classification (IPC) or to both national classification and IPC

**B. FIELDS SEARCHED**

Minimum documentation searched (classification system followed by classification symbols)

H01M 4/62(2006.01); H01M 10/0525(2010.01); H01M 10/42(2006.01); H01M 12/08(2006.01); H01M 4/13(2010.01); H01M 4/139(2010.01); H01M 4/48(2010.01); H01M 4/485(2010.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal), STN (registry, caplus) & keywords: 폴리아믹산(polyamic acid), 폴리이미드(polyimide), 가교(crosslinking), 에스테르 결합(ester bond), 바인더(binder), 음극(negative electrode), 보호층(protecting layer), 리튬 전지(lithium battery)

**C. DOCUMENTS CONSIDERED TO BE RELEVANT**

| Category* | Citation of document, with indication, where appropriate, of the relevant passages | Relevant to claim No. |
|---|---|---|
| X<br>A | KR 10-2019-0035387 A (SAMSUNG ELECTRONICS CO., LTD. et al.) 03 April 2019 (2019-04-03)<br>See claims 1-17 and 26; and paragraphs [0021], [0047] and [0120]-[0129]. | 1-15<br>16-20 |
| A | KR 10-2017-0061866 A (LG CHEM, LTD.) 07 June 2017 (2017-06-07)<br>See claim 1. | 1-20 |
| A | KR 10-2005-0041661 A (SAMSUNG SDI CO., LTD.) 04 May 2005 (2005-05-04)<br>See claim 1. | 1-20 |
| A | PHAM, H. Q. et al. Fluorinated Polyimide as a Novel High-Voltage Binder for High-Capacity Cathode of Lithium-Ion Batteries. Adv. Funct. Mater. 2018, [electronic publication] 28 November 2017, vol. 28, article no. 1704690, pp. 1-9.<br>See entire document. | 1-20 |

☑ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **24 June 2024** | **26 June 2024** |
| Name and mailing address of the ISA/KR<br>**Korean Intellectual Property Office**<br>**Government Complex-Daejeon Building 4, 189 Cheongsa-ro, Seo-gu, Daejeon 35208**<br>Facsimile No. **+82-42-481-8578** | Authorized officer<br><br>Telephone No. |

Form PCT/ISA/210 (second sheet) (July 2022)

**INTERNATIONAL SEARCH REPORT**

International application No.
**PCT/KR2024/003728**

**C. DOCUMENTS CONSIDERED TO BE RELEVANT**

| Category* | Citation of document, with indication, where appropriate, of the relevant passages | Relevant to claim No. |
|---|---|---|
| A | KR 10-2020-0118952 A (THE INDUSTRY & ACADEMIC COOPERATION IN CHUNGNAM NATIONAL UNIVERSITY (IAC) et al.) 19 October 2020 (2020-10-19)<br>See entire document. | 1-20 |
| A | KR 10-2021-0006467 A (UBE INDUSTRIES, LTD.) 18 January 2021 (2021-01-18)<br>See entire document. | 1-20 |

Form PCT/ISA/210 (second sheet) (July 2022)

**INTERNATIONAL SEARCH REPORT**
**Information on patent family members**

International application No.
**PCT/KR2024/003728**

| Patent document cited in search report | | | Publication date (day/month/year) | Patent family member(s) | | | Publication date (day/month/year) |
|---|---|---|---|---|---|---|---|
| KR | 10-2019-0035387 | A | 03 April 2019 | CN | 109560262 | A | 02 April 2019 |
| | | | | CN | 109560262 | B | 23 May 2023 |
| | | | | KR | 10-2473534 | B1 | 05 December 2022 |
| | | | | US | 10964937 | B2 | 30 March 2021 |
| | | | | US | 2019-0097220 | A1 | 28 March 2019 |
| KR | 10-2017-0061866 | A | 07 June 2017 | KR | 10-2003301 | B1 | 01 October 2019 |
| KR | 10-2005-0041661 | A | 04 May 2005 | CN | 100612377 | A | 04 May 2005 |
| | | | | JP | 2005-142156 | A | 02 June 2005 |
| | | | | KR | 10-0542213 | B1 | 10 January 2006 |
| | | | | US | 2005-0095504 | A1 | 05 May 2005 |
| KR | 10-2020-0118952 | A | 19 October 2020 | KR | 10-2261253 | B1 | 07 June 2021 |
| KR | 10-2021-0006467 | A | 18 January 2021 | CN | 112399980 | A | 23 February 2021 |
| | | | | CN | 112399980 | B | 14 January 2022 |
| | | | | EP | 3805294 | A1 | 14 April 2021 |
| | | | | EP | 3805294 | A4 | 02 March 2022 |
| | | | | KR | 10-2021-0148369 | A | 07 December 2021 |
| | | | | KR | 10-2360593 | B1 | 10 February 2022 |
| | | | | KR | 10-2634562 | B1 | 08 February 2024 |
| | | | | TW | 202003698 | A | 16 January 2020 |
| | | | | US | 11532819 | B2 | 20 December 2022 |
| | | | | US | 2022-0109158 | A1 | 07 April 2022 |
| | | | | WO | 2019-225717 | A1 | 28 November 2019 |

Form PCT/ISA/210 (patent family annex) (July 2022)